# EUROPEAN PATENT APPLICATION

(11) **EP 4 752 474 A1**
(43) Date of publication of application: **03.06.2026**
(21) Application number: 24849554.1
(22) Date of filing: 30.07.2024
(51) Int. Cl.: F25D 23/06, F25D 25/02, F16L 59/065

(54) **HEAT INSULATOR**

(30) Priority: 31.07.2023 KR 20230100004
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); RYU, Minsu, Seoul 08592 (KR)
(74) Representative: Ter Meer Steinmeister & Partner
(86) International application number: PCT/KR2024/011101
(87) International publication number: WO 2025/028987

(57) **Abstract**

The present disclosure relates to a refrigerator having a vacuum heat insulator. The refrigerator comprises: a refrigerator main body having a storage chamber provided therein and having a first panel, a second panel, and a third panel which form the storage chamber; a shelf provided inside the storage chamber; a joint made of a insulatorinsulating material and configured to block a corner that form the boundary between the first panel and the second panel; and a shelf support frame for supporting the shelf. Each of the first panel, the second panel, and the third panel comprises: a first plate disposed toward the storage chamber; a second plate spaced apart from the first plate and configured to form a vacuum space with the first plate; a sealing part for sealing the first plate and the second plate; and a support for supporting the first plate and the second plate. A vacuum heat insulator is thus configured. Accordingly, it is possible to suppress the loss of cold air in the boundary region between adjacent heat-insulating walls that constitute the storage chamber.

## Description

### Technical Field

The present disclosure relates to a heat insulator. The present disclosure relates to a refrigerator having a heat insulator.

### Background Art

A refrigerator is configured to include a refrigerator main body in which a storage chamber for storing food is provided, and a door for opening and closing the storage chamber. The refrigerator main body includes a cold air supply device capable of supplying cold air to the storage chamber. The refrigerator main body includes an outer case forming an exterior, an inner case spaced apart on one side of the outer case, and a insulating part charged between the outer case and the inner case. In conventional refrigerators, there is a problem that a insulating part including a wall of a storage chamber of the refrigerator has a relatively large thickness, so that the storage chamber becomes relatively small compared to a size of an exterior appearance.

### Disclosure

### Technical Problem

Therefore, an object of the present disclosure is to provide a refrigerator having a vacuum insulator capable of reducing a thickness of a heat-insulating wall forming a storage chamber.

Another object of the present disclosure is to provide a refrigerator having a vacuum insulator capable of suppressing the loss of cold air in a boundary region between adjacent heat-insulating walls forming the storage chamber.

Yet another object of the present disclosure is to provide a refrigerator having a vacuum heat insulator capable of suppressing interference between internal components of the storage chamber.

Still yet another object of the present disclosure is to provide a refrigerator having a vacuum insulator capable of suppressing the occurrence of interference between a joint heat-insulating a boundary of a heat-insulating wall forming the storage chamber, and a shelf support frame.

### Technical Solution

A heat insulator of the present disclosure may be provided as at least one heat insulator. As an example, the heat insulator of the present disclosure may provide a first wall extending in one direction; and a second wall extending in a direction different from the one direction. As another example, the heat insulator of the present disclosure may include a first heat insulator and a second heat insulator. The second heat insulator may be provided as a separate component separated from the first heat insulator. The second heat insulator may be connected to the first heat insulator by a connector. In the present disclosure, the connector may be defined as a joint. The second heat insulator may include a portion extending in the same direction as the first heat insulator. Each of the first, second, third, and fourth panels may be provided in plurality. The panel may be a heat insulator or a vacuum heat insulator. The first panel may include one of the first panels forming one of the first surfaces of the refrigerator, and the other one of the first panels forming the other one of the second surfaces of the refrigerator. At least one of the first, second, third, and fourth panels may provide at least a portion of a wall forming a storage chamber of the refrigerator. At least one of the first, second, third, and fourth panels may provide at least a portion of a wall forming a main body of the refrigerator.

A refrigerator of the present disclosure may include at least one panel. The plurality of panels may be connected by joints. The present disclosure may include a first panel forming a first surface (e.g., side surface) of the refrigerator. Optionally, the present disclosure may include a second panel forming a second surface (e.g., rear surface) of the refrigerator. Optionally, the present disclosure may include a third panel forming a third surface (e.g., top surface) of the refrigerator. Optionally, the present disclosure may include a fourth panel forming a fourth surface (e.g., bottom surface) of the refrigerator. Each of the first, second, third, and fourth panels may be provided in plurality. The panel may be a heat insulator or a vacuum heat insulator.

Specifically, a plurality of vacuum heat insulators forming corners of a storage chamber and a joint formed as a insulator insulating material disposed to block the corners to significantly reduce a thickness of a heat-insulating wall of the storage chamber.

By suppressing formation of heat bridges at the corners of the storage chamber, an increase in cold air loss of the storage chamber due to the formation of the heat bridges may be significantly suppressed.

The present disclosure may include a main body having a storage chamber therein, and including first panels provided on both sides of the storage chamber, a second panel provided in the storage chamber, and/or a third panel provided on a third surface of the storage chamber. A shelf may be provided inside the storage chamber. A joint formed by a insulator insulating material may be provided at a corner formed by at least two panels among the first, second, and third panels. A shelf support frame may be provided that is connected to the second panel or supports the shelf to be spaced apart from the corner. At least one of the first panel, the second panel, and the third panel may include a first plate disposed toward the storage chamber; a second plate spaced apart from the first plate, and forming a vacuum space with the first plate; and the vacuum space provided between the first plate and the second plate. Accordingly, a heat bridge is formed at the corner of the storage chamber to prevent an increase in cold air loss. An heat-insulating wall of the storage chamber is formed as the vacuum heat insulator, so a thickness of the heat-insulating wall may be significantly reduced. According to such a configuration, when the storage chambers have the same exterior size, a capacity of the storage chamber may be significantly increased.

The joint may include a first insulating part provided on at least one of both sides of the second panel. The joint may include a second insulating part provided to be connected to the first panel or provided to be bent from the first insulating part. The shelf support frame may be spaced apart from the second panel. The first insulating part is configured to be provided between the shelf support frame and the second panel. Accordingly, cold air leakage through corners (e.g., a left corner and a right corner) of the second panel may be suppressed. By suppressing direct connection between the shelf support frame and the second panel, cold air leakage due to connection between the shelf support frame and the second panel may be suppressed. A length of the first insulating part is formed to be longer than a length of the second insulating part. Accordingly, connection between the surface of the second panel and air in the storage chamber may be suppressed.

Optionally, the first region (e.g., rear region) of the shelf is provided with a coupling protrusion.

The coupling protrusion includes a first protrusion and/or a second protrusion spaced apart from each other. The first protrusion is configured to have a bent part bent downward with respect to a protruding direction. The shelf support frame may include an insertion surface having an insertion hole into which the coupling protrusion is inserted. The shelf support frame may include a contacting surface provided on the insertion surface and being in contact with the joint. The shelf support frame may include a connection surface connecting the insertion surface and the contacting surface. The rear contacting surface is bent from the connection surface in a direction away from the first panel. Accordingly, the connection surface of the shelf support frame is spaced apart from the corner so that cold air leakage through the connection surface of the shelf support frame may be suppressed. A length between the first panel and the insertion surface is formed to be longer than a length between the first panel and the shelf. Accordingly, a storage capacity of the shelf may be increased, and cold air leakage through the shelf support frame may be suppressed.

Optionally, the joint is configured to further include a connection insulating part connecting the first insulating parts. Accordingly, connection between the air in the storage chamber and the second panel may be suppressed. A receiving space for a multi-duct is formed in the first insulating part and/or the connection insulating part of the joint. Accordingly, the multi-duct may be disposed spaced apart from a corner of the second panel. According to such a configuration, since the multi-duct is spaced apart from the corner of the second panel, cold air leakage of the multi-duct may be suppressed.

Optionally, the joint is configured to include a third insulating part bent from the connection insulating part so as to be connectable to the third panel. Accordingly, cold air leakage through the corners of the second panel and the third panel may be minimized.

Optionally, the refrigerator is configured to include a joint support frame connected to the joint and supporting the joint to be pressed toward the second panel. Accordingly, the number of separate internal component supports installed to support the second panel may be reduced.

The joint support frame is formed integrally with the shelf support frame. Accordingly, the number of separate internal component supports for coupling and supporting the joint support frame and the shelf support frame may be reduced.

Optionally, the joint support frame may include a first pressing surface that presses the joint. The joint support frame may include a second pressing surface bent on one side of the first pressing surface. The first pressing surface may be connected to the first insulating part and/or the connection insulating part. The second pressing surface is configured to be connected to the second insulating part. Accordingly, the first insulating part and/or the connection insulating part of the joint may be in close contact with the second panel. The second insulating part may be prevented from being spaced apart from the first panel. The first pressing surface is disposed to face the insertion surface of the shelf support frame, and the second pressing surface is disposed to face the connection surface of the shelf support frame. Accordingly, the joint support frame and the shelf support frame may be joined to form a rectangular cross-section. Accordingly, an installation space of the joint support frame and/or the shelf support frame may be reduced.

Optionally, the refrigerator is configured to include a support bracket provided in the third panel, and supporting a portion (e.g., upper end) of the joint support frame. The joint support frame may be supported by the support bracket in a state of being in close contact with the joint. Accordingly, the number of separate internal component supports for supporting the joint support frame may be reduced. A portion of the joint support frame is configured to be coupled to the partition wall.

Optionally, the joint may include a first connection part extending in a first direction and a second connection part extending in a second direction. The joint may include a connection part connecting the first connection part and/or the second connection part. The joint may include the first connection part, the second connection part, and/or a filling part filled inside the connection part. The first connection part may be connected to the second panel. The second connection part may be disposed to be connected to the first panel. The shelf support frame is provided between the first connection parts. Accordingly, a corner forming a boundary between the second panel and the first panel may be blocked by the joint, and as a result, cold air leakage through the corner may be suppressed. The shelf support frame is disposed spaced apart from the corners of the second panel and the first panel, and as a result, cold air leakage due to approach of the shelf support frame and the corners may be suppressed.

Optionally, the shelf support frame may include an insertion surface having an insertion hole into which the coupling protrusion is inserted. The shelf support frame may include a surface that is bent on at least one of both sides of the insertion surface. The shelf support frame is configured to include a connection back surface bent on at least one side of the both sides and connected to the second panel. Accordingly, a load of the shelf may be distributed and supported on the second panel.

Optionally, an internal component support supporting the shelf support frame is provided between the second panel and the shelf support frame. Accordingly, the shelf support frame may be integrally coupled to the second panel. The internal component support may include a plate coupled to the second panel and/or a bolt protruding from the plate. A bolt hole is formed to penetrate the connection surface of the shelf support frame so that the bolt may be inserted. The bolt may protrude through the bolt hole and a nut may be screwed to the bolt. The plate of the internal component support may be joined to the first plate of the second panel by an adhesive. The plate of the internal component support may be welding-coupled to the first plate of the second panel. Accordingly, assembly and coupling of the shelf support frame may be smoothly performed.

Optionally, the support includes a bar that are disposed to be spaced between the first plate and the second plate, and the second panel is configured to have a heat transfer suppression section in which a density of the bar is formed lower than a peripheral region to correspond to one region of the shelf support frame and/or one region of the internal component support. Accordingly, leakage of cold air inside the storage chamber to the outside of the storage chamber through the shelf support frame, a connection point of the first plate of the second panel connected to the shelf support frame, and a bar directly connected to the connection point, and/or a bar adjacent to the connection point may be suppressed. The second panel is configured to have a strength reinforcement section in which the density of the bar is formed higher than the peripheral region in one region of the shelf support frame. Accordingly, damage or deformation of the second panel due to the load of the shelf may be suppressed. The second panel may include a first bar having a first thickness and a second bar having a second thickness thicker than the first thickness. The second panel is formed such that the second bar is disposed in one region of the shelf support frame, and the first bar is disposed in a region spaced from one region of the shelf support frame. Accordingly, the damage or deformation of the second panel due to the load of the shelf may be suppressed.

Optionally, the shelf support frame may include at least one insertion that is spaced and penetrated by the coupling protrusion to be inserted. A multi-duct through which cold air is discharged may be provided between the shelf support frames. A multi-duct cover blocking at least a portion of the multi-duct, the shelf support frame, and the joint may be provided on one side of the multi-duct. The multi-duct cover is provided with a through-part penetrated by the insertion hole to be exposed. Accordingly, the first plate, which is a surface of the second panel, is blocked so that direct connection between air in the storage chamber and the second panel may be suppressed. Height adjustment of the shelf may be smoothly performed.

### Advantageous Effects

As described above, according to an embodiment of the present disclosure, by providing the joint made of the insulator insulating material at the corners forming the boundary between the first panel and the second panel, the cold air leakage through the corners of the first panel and the second panel can be suppressed.

By configuring the first panel, the second panel, and/or the third panel as the vacuum insulator, an internal storage capacity can be increased without increasing an exterior size of the refrigerator main body.

The shelf support frame is provided to be spaced apart from the corners forming the boundary between the first panel and the second panel, cold air leakage through the shelf support frame can be suppressed.

The joint may include first insulating parts provided on both sides of the second panel and/or a second insulating part bent from the first insulating part to be connected to the first panel. The shelf support frame is spaced apart from the second panel, or the first insulating part is provided between the shelf support frame and the second panel, and as a result, direct connection between the shelf support frame and the second panel can be suppressed. The cold air leakage through the shelf support frame can be suppressed.

A length of the first insulating part is formed longer than a length of the second heat insulation part, so that direct connection between the second panel and internal air of the storage chamber can be suppressed.

The shelf support frame may include an insertion surface having an insertion hole, a connection back surface provided on the insertion surface and connected to the joint, and/or a connection surface connecting the insertion surface and the contacting surface. The connection back surface is configured to be bent in a direction away from the first panel, so that cold air leakage through the connection surface of the shelf support frame can be suppressed.

A length between the first panel and the insertion surface is formed to be longer than a length between the first panel and the shelf, so that a storage capacity of the shelf can be increased, and occurrence of the cold air leakage through the shelf support frame can be suppressed.

The joint further includes a connection insulating part connecting the first insulating part, so that connection between a surface of the second panel and the internal air of the storage chamber can be suppressed.

The joint is configured to include a third insulating part bent from the connection insulating part to be connectable to the third panel, and as a result, cold air leakage through corners forming a boundary between the second panel and the third panel can be suppressed.

The refrigerator is configured to include a joint support frame supporting the joint to be pressed toward the second panel, and as a result, the number of separate internal component supports installed to support the joint can be reduced.

The joint support frame is formed integrally with the shelf support frame, and as a result, the number of separate internal component supports for supporting the joint support frame and/or the shelf support frame can be reduced.

The joint support frame may include a first pressing surface and/or a second pressing surface. The first pressing surface may be connected to the first insulating part and/or the connection insulating part. The second pressing surface may be connected to the second insulating part. As a result, the joint can be in close contact with the second panel and/or the first panel.

The first pressing surface may face the insertion surface of the shelf support frame. The second pressing surface may be disposed to face the connection surface of the shelf support frame. Accordingly, an installation space of the shelf support frame and/or the joint support frame can be reduced.

A support bracket supporting a portion (e.g., upper end) of the joint support frame is provided on the third panel, and as a result, the number of separate internal component supports for supporting the joint support frame can be reduced.

A portion of the joint support frame (e.g., lower end) is coupled to a partition wall, and as a result, the number of separate internal component supports for supporting the joint support frame can be reduced.

The joint may include a first connection part, a second connection part a connection part connecting the first connection part and the second connection part, and/or a filling part filled in at least one of the first connecting part, the second connection part, and the connection part. The joint may be disposed such that the first connection part is connected to the second panel and/or the second connection part is connected to the first panel. The shelf support frame may be provided between the first connecting parts, and as a result, the cold air leakage through the corners forming the boundary of the first panel and the second panel can be suppressed.

The shelf support frame may include an insertion surface having an insertion hole into which a coupling protrusion of the shelf is inserted, a side surface bent one side (e.g., both sides) of the insertion surface, and/or a connection surface bent from the side surface and connected to the second panel, and as a result, a load of the shelf can be distributed and supported.

An internal component support is provided between the second panel and the shelf support frame, and as a result, the shelf support frame can be integrally coupled to and supported by the second panel.

The internal component support may include a plate coupled to the second panel and/or a bolt protruding from the plate. A connection surface of the shelf support frame is provided with a through-part penetrated by the bolt to be inserted, and as a result, smooth coupling and decoupling of the shelf support frame may be performed.

A first region (e.g., rear region) of the shelf support frame of the second panel and/or a first region (e.g., rear region) of the internal component support includes a heat transfer suppression section in which a density of a bar is formed lower than a density in a peripheral region, and as a result, cold air leakage through the bar can be suppressed.

The first region (e.g., rear region) of the shelf support frame of the second panel and/or the first region (e.g., rear region) of the internal component support includes a strength reinforcement section having a high density of the bars, and as a result, damage and/or deformation of the second panel caused by the load of the shelf can be suppressed.

The second panel includes a first bar and a second bar having different thicknesses, and the second bar having a greater thickness is provided in the first region (e.g., rear region) of the shelf support frame and/or the first region (e.g., rear region) of the internal component support, and as a result, the damage and/or deformation of the second panel caused by the load of the shelf can be suppressed.

A multi-duct through which cold air is discharged may be provided between the shelf support frames. A multi-duct cover blocking the multi-duct, the shelf support frame, and the joint may be provided on one side of the multi-duct. The multi-duct cover is provided with a through-part penetrated by the insertion hole to be exposed, and as a result, connection between the second panel and air in the storage chamber can be suppressed and easy position adjustment of the shelf can be performed.

### Description of Drawings

FIG. 1 is a perspective view illustrating an exterior appearance of a refrigerator according to an embodiment of the present disclosure.
FIG.2 is a conceptual view for describing a vacuum insulator provided in the refrigerator of FIG.1.
FIG. 3 is a conceptual view for describing a third plate provided in a plate of FIG. 2.
FIG. 4 is a conceptual view for describing a thermal insulator provided in the plate of FIG. 3.
FIG. 5 is a perspective view of a refrigerant according to an embodiment of the present disclosure,
FIG. 6 is a perspective view illustrating an interior of the refrigerator in FIG. 5.
FIG. 7 is a plan cross-sectional view of a shelf region in FIG. 6.
FIG. 8 is an enlarged view of a main part in FIG. 7.
FIG. 9 is a perspective view of a shelf in FIG. 6.
FIG. 10 is a plan view of the shelf in FIG. 9.
FIG. 11 is a cross-sectional view of a panel part of the shelf in FIG. 9,
FIG. 12 is a side view of a frame of the shelf in FIG. 9.
FIG. 13 is a perspective view of a joint support frame and a shelf support frame in FIG. 7.
FIG. 14 is a front view of the joint support frame and the shelf support frame in FIG. 13.
FIG. 15 is a schematic view illustrating an interior for describing a coupling relationship between a joint support frame and a support bracket inside the refrigerator main body in FIG. 5.
FIG. 16 is an enlarged front view of a support bracket region in FIG. 15.
FIG. 17 is a perspective view of a coupling state of a support bracket and an internal component support in FIG. 16.
FIG. 18 is a perspective view of a coupling region of the support bracket and the joint support frame in FIG. 16.
FIG. 19 is a side view of the support bracket and the joint support frame in FIG. 18.
FIG. 20 is a side view of the support bracket and the internal component support of FIG. 19 in a separation state.
FIG. 21 is a front view illustrating a shelf region of another refrigerator according to another embodiment of the present disclosure.
FIG. 22 is a plan cross-sectional view illustrating a coupling state of a shelf in FIG. 21.
FIG. 23 is an enlarged view of a main part in FIG. 22.
FIG. 24 illustrates a modified example of a second panel in FIG. 22.
FIG. 25 is an enlarged view of a main part in FIG. 24.
FIG. 26 illustrates a modified example of the second panel in FIG. 22.
FIG. 27 is an enlarged view of a main part in FIG. 26.
FIG. 28 illustrates a modified example of the second panel in FIG. 22.
FIG. 29 is an enlarged view of a main part in FIG. 28.

### Best Mode

Hereinafter, a [Common Description] is described which describes parts commonly defined in all embodiments of the present disclosure.

Optionally, a heat insulator of the present disclosure may be provided as one insulator. As an example, the heat insulator may provide a first wall extending in one direction; and a second wall extending in a direction different from the one direction. Optionally, the heat insulator of the present disclosure may include a first insulator and a second insulator. The second insulator may be provided as a separate component separated from the first insulator. The second insulator may be connected to the first insulator by a connector. In the present disclosure, the connector may be defined as a joint. The second insulator may include a portion extending in the same direction as the first insulator. The second insulator may include a portion extending in a different direction from the first insulator. The second insulator may include a portion connected to the first insulator, or may include a portion disposed to overlap with the first insulator in at least one direction. The heat insulator may be a vacuum insulator including a vacuum space or a non-vacuum insulator not including the vacuum space. The heat insulator may be a combination of the vacuum insulator and the non-vacuum insulator. The vacuum space provided in the second insulator may include a portion extending in the same direction as the vacuum space provided in the first insulator. The vacuum space provided in the second insulator may include a portion extending in a different direction from the vacuum space provided in the first insulator. The vacuum space provided in the second insulator may include a portion disposed to overlap with the vacuum space provided in the first insulator in at least one direction. The heat insulator may be provided in the form of a panel. In the present disclosure, a "panel" is described below as an example, and an disclosure in which the "panel" is replaced with the "insulator" may also be included in the present disclosure. For example, in the present disclosure, if it is described below that at least two panels of a main body form an exterior of a refrigerator, in relation to this, in the present disclosure, at least two insulators of the main body may be understood or interpreted as forming the exterior of the refrigerator.

Optionally, the refrigerator of the present disclosure may include a main body. The main body may include at least one storage chamber. The main body may include a partition wall that separates a first storage chamber and a second storage chamber. A first storage chamber joint may include a first-first storage chamber joint, a second-first storage chamber joint, and/or a third-first storage chamber joint. A second storage chamber joint may be provided on one side of the second storage chamber. The second storage chamber joint may include a first joint, a second joint, and/or a third joint.

The partition wall may include the vacuum insulator and/or the non-vacuum insulator. The refrigerator of the present disclosure may include a door. The refrigerator of the present disclosure may include a machine chamber disposed on one side of the main body. In the machine chamber, one or more of a compressor, heat dissipation components (e.g., a condenser, a heat dissipation part of a thermoelectric module, a heat sink that exchanges heat with the heat dissipation part of the thermoelectric module, etc.), and a cooling fan may be disposed. The machine chamber may include one or more of a first cover (e.g., a side cover) forming at least a portion of a first surface (e.g., a side surface), a second cover (e.g., a back cover) forming at least a portion of a second surface (e.g., a rear surface), a third cover (e.g., an upper cover) forming at least a portion of a third surface (e.g., an upper surface), a fourth cover (e.g., a bottom cover) forming at least a portion of a fourth surface (e.g., a bottom surface), and a fifth cover (e.g., a front cover) forming at least a portion of a fifth surface (e.g., a front surface). One or more of the first, second, third, fourth, and fifth covers may be provided as a single component or may be provided in plurality. The machine chamber in the refrigerator of the present disclosure may include the heat insulator.

The panel may include one or more of a first plate, a second plate, and a side plate. A vacuum space may be provided between the first plate and the second plate. A refrigerator of the present disclosure may include at least one panel. The present disclosure may include one or more of a first panel forming at least a portion of a first surface (e.g., side surface) of the refrigerator; a second panel forming at least a portion of a second surface (e.g., rear surface) of the refrigerator; a third panel forming at least a portion of a third surface (e.g., upper surface) of the refrigerator; a fourth panel forming at least a portion of a fourth surface (e.g., bottom surface) of the refrigerator; and a fifth panel forming at least a portion of a fifth surface (e.g., front surface) of the refrigerator. One or more of the first, second, third, fourth, and fifth surfaces of the refrigerator may provide at least a portion of a wall forming the main body or may provide at least a portion of a wall forming the door. One or more of the first, second, third, fourth, and fifth panels may be provided as a single component or may be provided in plurality. The joint may be provided to connect edges of the refrigerator or to connect a first wall and a second wall forming walls of the refrigerator to each other. The joint may be provided to connect the panel to another component (e.g., another panel). The joint may be provided to connect at least two of the first, second, third, fourth, and fifth panels. One or more of the first, second, third, fourth, and fifth panels may be provided in plurality, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least the other one of the first, second, third, fourth, and fifth panels. The third surface of the joint may be connected to the first surface of the joint and/or the second surface of the joint. The third surface of the joint may be connected to an corner of the first surface of the joint and/or an corner of the second surface of the joint. The third surface of the joint may be formed to be inclined to at least one of the first surface of the joint and the second surface of the joint. At least some of the first, second, third, fourth, and fifth panels may be provided as panels having a first insulation performance per unit thickness, and at least some others of the first, second, third, fourth, and fifth panels may be provided as panels having a second insulation performance per unit thickness. The first heat insulation performance and the second heat insulation performance may be different.

The heat insulator or refrigerator of the present disclosure may include ducts. The ducts may include a first duct, a second duct, and/or a third duct. The first duct may supply cold air to the first storage chamber or the second storage chamber. The second duct may receive an evaporator. The third duct may be connected in communication with the first duct and the second duct. The third duct may include a first surface, a second surface, a third surface, a fourth surface, and/or a fifth surface. The first surface of the third duct may wrap the first surface of the joint. The second surface of the third duct may wrap the second surface of the joint. The third surface of the third duct may wrap the third surface of the joint. The third duct may include the fourth surface. The fourth surface of the third duct may extend on the first surface or may be disposed to face the second storage chamber. The fifth surface of the third duct may extend on the second surface of the third duct or may be disposed to face the evaporator.

The heat insulator or refrigerator of the present disclosure may include a block. The block may include a portion extending in the same direction as one or more of the first, second, third, fourth, and fifth panels. The block may include a portion extending in a different direction from one or more of the first, second, third, fourth, and fifth panels. The block may include a first surface (e.g., left surface), a second surface (e.g., right surface), a third surface (e.g., rear surface), a fourth surface (e.g., bottom surface), a fifth surface (e.g., upper surface), and a sixth surface (e.g., front surface). Some of the first, second, third, fourth, and fifth surfaces of the refrigerator may be provided in the form of the panel, and some others of the first, second, third, fourth, and fifth surfaces of the refrigerator may be provided in the form of the block. The block may be provided as the non-vacuum insulator. As an example, the block may be a block cover and/or PU foam filled inside the block cover. The block may include one or more of a first block part (e.g., side-surface block part), a second block part (e.g., rear-surface block part or front block part), and a third block part (e.g., bottom-surface block part or upper-surface block part). The first, second, and third block parts may each be provided in plurality. At least two or more of the first, second, and third block parts may be connected to be provided as the joint. The third block part may form one surface of the first storage chamber and/or form one surface of the machine chamber. The third block part may be provided as a partition wall or may form one surface of the first storage chamber.

The heat insulator or refrigerator of the present disclosure may include a heat insulation reinforcement part. The heat insulation reinforcement part may include a portion connected to one side of the block or may include a portion formed to protrude on the block.

The heat insulator or refrigerator of the present disclosure may include a hinge. The hinge may be disposed on one side of the heat insulator. The hinge may be disposed on the main body and/or door of the refrigerator.

The hinge may include one or more of a hinge fixing part, which is a part where the hinge is coupled to at least one of the heat insulator, the body of the refrigerator, and the door of the refrigerator, a hinge shaft, and a hinge connecting part, which is a portion extending to protrude from the hinge fixing part. The hinge may include one or more of a first hinge (e.g., upper hinge) disposed on one side of a wall forming the first storage chamber, a second hinge (e.g., middle hinge) disposed on the partition wall, and a third hinge (e.g., lower hinge) of a wall forming the second storage chamber. The heat insulator or refrigerator of the present disclosure may include one or more of a hinge reinforcement frame that reinforces a strength of the hinge; a cover to which the hinge is coupled; and a hinge reinforcement plate disposed to be connected to or received in the panel. The hinge reinforcement frame may include one or more of first, second, third, and fourth frame parts. At least two of the first, second, third, and fourth frame parts may extend in different directions.

The heat insulator or refrigerator of the present disclosure may include a support frame. The support frame may support one surface of the panel. The support frame may include a coupling part. The block may be supported in the machine chamber by the support frame. The support frame may include a first support frame and/or a second support frame.

The heat insulator or refrigerator of the present disclosure may include an inner cover. The inner cover may be disposed between the cover of the machine chamber and the hinge reinforcement frame (e.g., the first frame part).

The heat insulator or refrigerator of the present disclosure may include a deco. The deco may be disposed on a surface of the heat insulator. The deco may be disposed on a surface of the main body and/or the door of the refrigerator. As an example, the deco may be disposed on an outer surface of the heat insulator or on an outer surface of the refrigerator.

The heat insulator or refrigerator of the present disclosure may include a hot line. The hot line may be disposed on the surface of the heat insulator. The hot line may be disposed on the surface of the main body and/or the door of the refrigerator. The hot line may be disposed between the deco and the surface of the heat insulator. The hot line may be disposed between the deco and the surface of the refrigerator and/or between the deco and the surface of the door.

The heat insulator or refrigerator of the present disclosure may include a casing. The casing may be an exterior casing or an interior casing. The exterior casing may be connected to the second plate. The exterior casing may be provided to cover at least a portion of the second plate. The exterior casing may be provided in contact with the second plate or spaced apart from the second plate by a predetermined distance. The interior casing may be connected to the first plate. The interior casing may be provided to cover at least a portion of the first plate. The interior casing may be provided in contact with the first plate or spaced apart from the first plate by a predetermined distance.

The heat insulator or refrigerator of the present disclosure may include a drawer and/or a drawer guide. The drawer guide may include a first storage chamber drawer guide provided in the first storage chamber. The first storage chamber drawer guide may include at least one of a first plate (e.g., side plate), a second plate (e.g., bottom plate), a third plate (e.g., upper plate), and a fourth plate (e.g., middle plate).

The drawer guide may include a second storage chamber drawer guide provided in a second storage chamber.

The heat insulator or refrigerator of the present disclosure may include a shelf and/or a shelf support frame.

[Detailed Description for Implementing the Disclosure] is divided into the foregoing [Common Description] and the following [Description Based on Drawings]. In the [Detailed Description for Implementing the Disclosure], each specific matter described for implementing the disclosure may be understood as an embodiment of the present disclosure. In the [Detailed Description for Implementing the Disclosure], a combination of at least two or more of the specific matters described for implementing the disclosure may also be understood as an embodiment of the present disclosure. For example, in the [Detailed Description for Implementing the Disclosure], each paragraph of the [Common Description] section or the section described based on the drawings, as well as a combination of such paragraphs, may be understood as an embodiment of the present disclosure. In another example, in the [Detailed Description for Implementing the Disclosure], each sentence of the [Common Description] section or the section described based on the drawings, as well as a combination of such sentences, may be understood as an embodiment of the present disclosure.

Hereinafter, based on each drawing, the [Description based on drawing] section describing the present disclosure will be described.

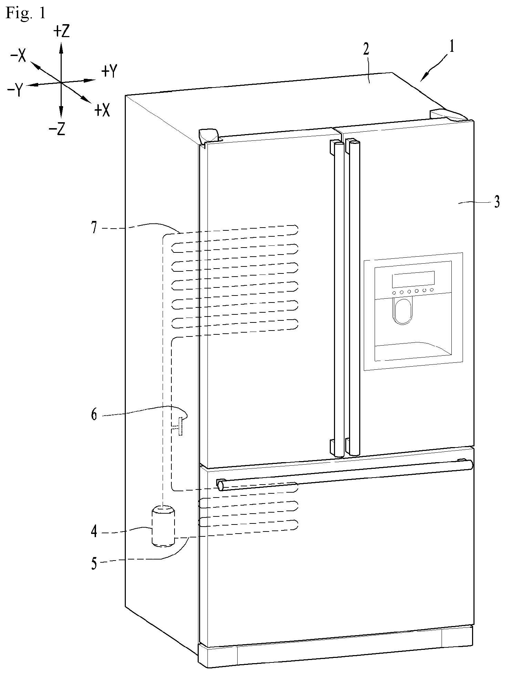

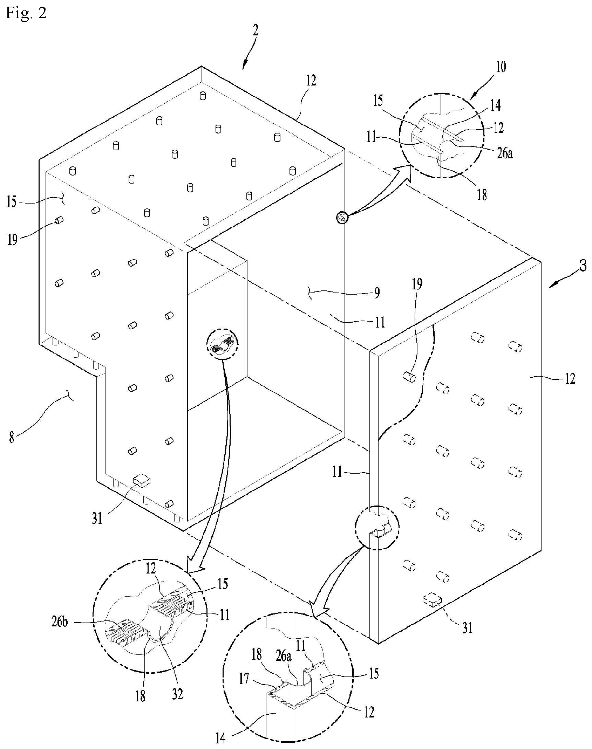

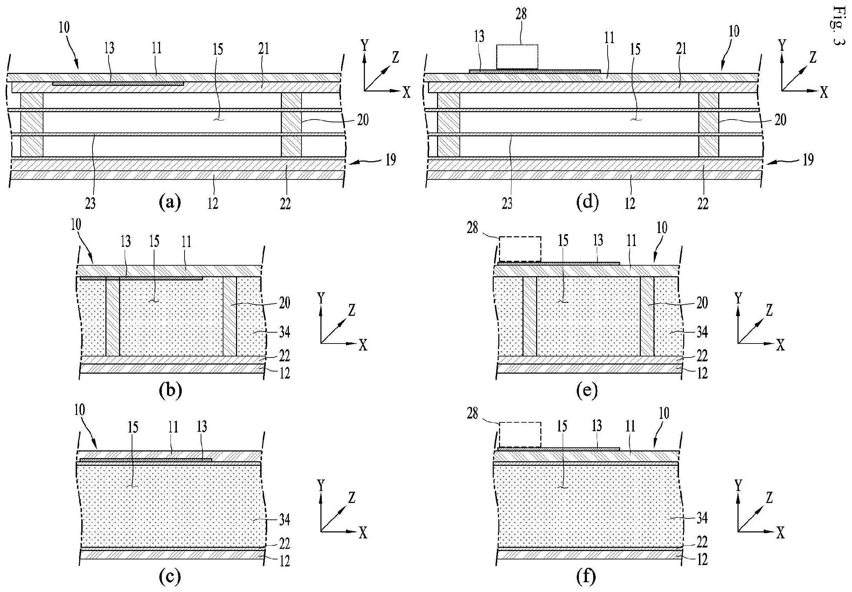

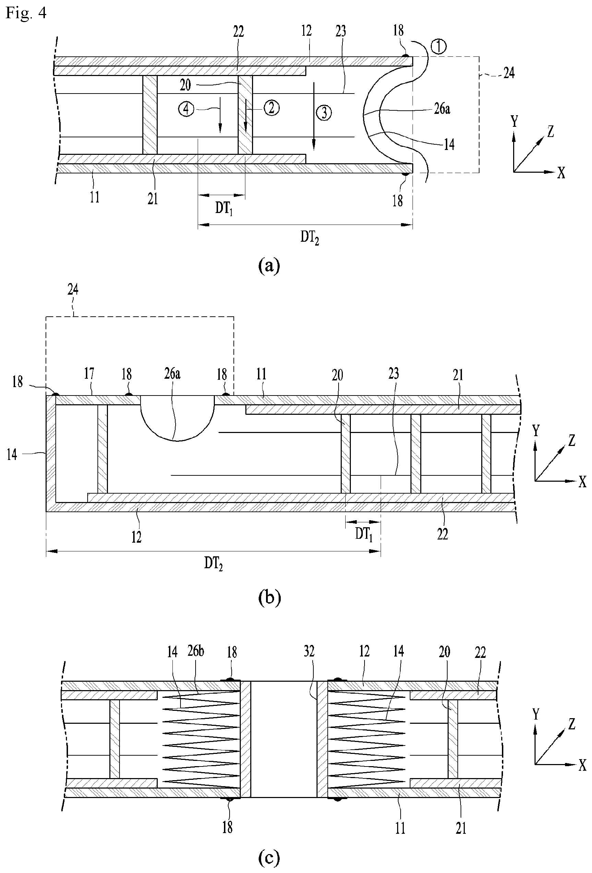

Referring to FIGS. 1 to 4, the heat insulator 10 of the present disclosure may include plates 11, 12, and 14. In the present disclosure, the term "plate" may refer to at least one of the first and second plates 11 and 12, and the side plate 14. Optionally, the heat insulator of the present disclosure may include a vacuum space 15. The vacuum space 15 may be formed by walls provided by the plates 11, 12, and 14. The vacuum space 15 may have a thickness in a first direction. The plates 11, 12, and 14 may include the first plate 11; and the second plate 12. The first plate 11 may include a portion extending in a direction different from the first direction. The second plate 12 may include a portion extending in a first direction different from the first direction. Optionally, the plates may include a side plate 14 including the portion extending in the first direction. As an example, the heat insulator 10 of the present disclosure may be provided such that the first and second plates 11 and 12 and the side plate 14 are each provided as separate components, and the separate components are connected to each other. As another example, the heat insulator 10 of the present disclosure may be provided such that at least two components among the first and second plates 11 and 12 and the side plate 14 are provided integrally, and the separated components are connected to each other. As yet another example, in the heat insulator 10 of the present disclosure, parts connecting the first and second plates 11 and 12 and the side plate 14 to each other may be each provided integrally. In this case, the first plate 11 may be provided as separated components, and the separated components may be provided to be connected to each other. Alternatively, the second plate 12 may be provided as separated components, and the separated components may be provided to be connected to each other. Alternatively, the side plate 14 may be provided as separated components, and the separated components may be provided to be connected to each other. Optionally, the heat insulator 10 of the present disclosure may include a third plate disposed on at least a portion of the heat insulator 10 or connected to at least a portion of the plates 11, 12, and 14. The third plate may include a part that is thinner than or has the same thickness as the plates 11, 12, and 14. The third plate may include a part that is provided thicker than the plates 11, 12, and 14. The third plate may be disposed in the vacuum space 15 or may be disposed outside the vacuum space 15. Examples of the third plate may be thermal insulators 23, 26a, 26b, and 34, a deformation resistor 13, etc., described in the present disclosure.

Optionally, the heat insulator 10 of the present disclosure may include thermal insulators 23, 26a, 26b, and 34 for reducing a heat transfer amount between a first space provided in the vicinity of the first plate 11 and a second space provided in the vicinity of the second plate 12, or for reducing a heat transfer amount between the first plate 11 and the second plate 12. A thermal insulator that reduces a heat transfer amount by conduction may be defined as conduction resistance sheets 26a and 26b, and a thermal insulator that reduces a heat transfer amount by radiation may be defined as a radiation resistance sheet 23. The thermal insulators 23, 26a, 26b, and 34 may be provided as a porous material 34 or provided as a filler 34. A filler having an interior filled with a porous material may be defined as a porous material 34. The thermal insulators 23, 26a, 26b, and 34 may be at least one of the radiation resistance sheet 23, the porous material 34, the filler 34, and the conduction resistance sheets 26a and 26b, or may include a mixture of at least two thereof. The thermal insulators 23, 26a, 26b, and 34 may be provided to be connected to at least a portion of the plates 11, 12, and 14 or not to contact the plates 11, 12, and 14. A shield 24 may be provided outside the thermal insulators 23, 26a, 26b, and 34 for thermal insulation. A connection frame 17 may be provided outside the thermal insulators 23, 26a, 26b, and 34. The heat insulator 10 may include a conduit penetrating the vacuum space 15. The conduit may be formed by providing a pipe wall 32 as a separate component, or provided in a form in which the pipe wall 32 is omitted and only a through-hole is formed in the plates. The side plate 14 or the thermal insulators 23, 26a, 26b, and 34 may be provided in the vicinity of the conduit.

Optionally, the heat insulator 10 of the present disclosure may include a deformation resistor 13 connected to at least a portion of the plates 11, 12, and 14 to increase deformation resistance of the plates 11, 12, and 14. When the deformation resistor is provided in a plate form, the deformation resistor may be referred to as a deformation resistance plate.

Optionally, the heat insulator 10 of the present disclosure may include a support 19 connected to at least a portion of the plates 11, 12, and 13 and holding the vacuum space 15. The support 19 may include a bar 20 having a portion extending in a first direction that is a thickness direction of the vacuum space 15. The support 19 may include a support plate 22 having a portion extending in a direction different from the first direction. The support 19 may include a plurality of bars 20 and a connection plate 21 connecting the plurality of bars 20. The support 19 may include at least one of the bar 20, the connection plate 21, and the support plate 22, or may include a mixture of at least two thereof.

Optionally, the heat insulator 10 of the present disclosure may include a component coupling part providing a part where the components 24, 28, and 32 are disposed or supported. As an example, when the component coupling part is provided in the form of a plate, the component coupling part may be referred to as a component coupling plate. The component connected to the component coupling part may include a penetrating component disposed to penetrate at least a portion of the heat insulator 10 or at least a portion of the plates 11, 12, and 14. The component connected to the component coupling part may include a surface component disposed to be connected to a surface of the heat insulator 10 or to surfaces of the plates 11, 12, and 14. The penetrating component may be a component forming a path through which fluids (electricity, refrigerant, water, and air, etc.) pass. The penetrating component may be provided in the form of a pipe. The pipe may include a straight pipe and/or a curved pipe. The pipes may be provided in plurality or may extend in one direction. The penetrating component may include at least one of the pipe, a first withdrawal part, and a second withdrawal part. In the present disclosure, the fluids are defined as all kinds of flowing objects. The fluids include moving solids, liquids, gases, electricity, etc. The penetrating component may be a component forming a path through which refrigerant for heat exchange passes, such as a Suction Line Heat Exchanger (SLHX) or a refrigerant pipe. The SLHX may be understood as a suction line heat exchanger that causes heat exchange between refrigerant that passes through an evaporator and refrigerant before entering the evaporator. The penetrating component may be an electric wire that supplies electricity to an apparatus. The penetrating component may be a component forming a path through which air may pass, such as a duct or port along whose surface the fluid flows. The port may include an exhaust port providing a path through which air is exhausted from a space formed between the first plate 11 and the second plate 12 in order to form the vacuum space 15. The penetrating component may be a path through which fluids such as cooling water, hot water, ice, and defrost water may pass. Examples of the surface component may be a peripheral insulation material, side panels, injected foam, a pre-prepared resin, hinges, latches, baskets, drawers, shelves, lighting, sensors, an evaporator 7, a front deco, and hot lines, heaters, exterior covers, interior covers, etc.

Through FIGS. 1 to 4, terms such as plate, first plate, second plate, side plate, third plate, vacuum space, thermal insulator, conduction resistance sheet, radiation resistance sheet, porous material, filler, component coupling part, joint, support, bar, support plate, connection plate, deformation resistor, deformation resistance plate, component coupling part, component coupling plate, penetrating component, surface component, duct, port, etc., are defined. In the present disclosure, when the terms are used in parts other than the parts where descriptions of FIGS. 1 to 4 are provided, the used terms should be interpreted as defined in FIGS. 1 to 4.

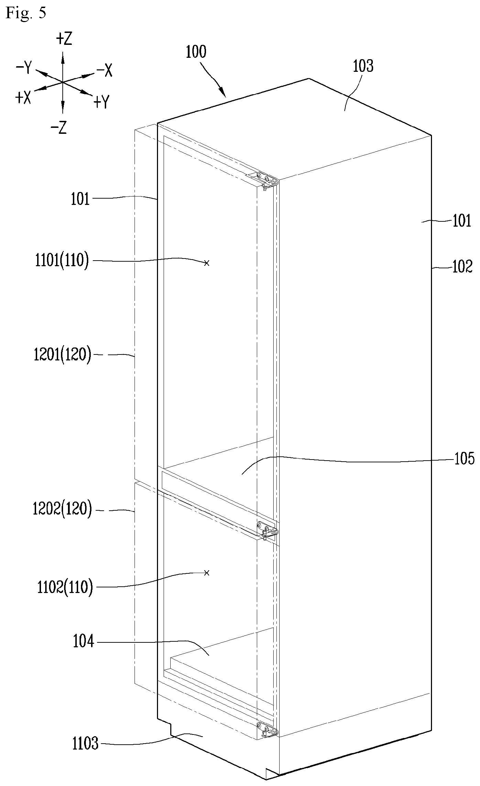

In the present disclosure, object A being connected to object B may be defined as at least a portion of object A and at least a portion of object B being directly connected, or at least a portion of object A and at least a portion of object B being connected through an intermedium interposed between objects A and B. As a modified example, object A being connected to object B may include object A and object B being integrally prepared in a shape connected by the aforementioned method. In the present disclosure, embodiments of connection may support, combine, and seal, which will be described later. In the present disclosure, object A being supported by object B may be defined as object A being restricted from movement in one or more directions among the +X, -X, +Y, -Y, +Z, and -Z axis directions by object B. In the present disclosure, an embodiment of support may be combine and seal, which will be described later. In the present disclosure, object A being coupled with object B may be defined as object A being restricted from movement in one or more directions among the X, Y, and Z axis directions by object B. In the present disclosure, an embodiment that combines may be a seal, which will be described later. In the present disclosure, object A being sealed to object B may be defined as a state in which fluid movement is not permitted at a portion where object A and object B are connected. In the present disclosure, one or more objects, that is, at least a portion of object A and object B, may be defined as including a portion of object A, the entirety of object A, a portion of object B, the entirety of object B, a portion of object A and a portion of object B, a portion of object A and the entirety of object B, the entirety of object A and a portion of object B, and the entirety of object A and the entirety of object B. In the present disclosure, plate A being a wall defining space A may be defined as at least a portion of plate A being a wall forming at least a portion of space A. That is, at least a portion of plate A may be the wall forming space A, or plate A may be the wall forming at least a portion of space A. In the present disclosure, a central portion of an object may be defined as a portion located at the center among three equally divided portions when the object is divided into three equal parts based on a lengthwise direction of the object. A peripheral portion of the object may be defined as a portion located on one side or the other side of the central portion among the three equally divided portions. The peripheral portion of the object may include a surface contacting the central portion and a surface on an opposite side thereof. The surface on the opposite side may be defined as a border or corner of the object. In the present disclosure, a degree of deformation resistance represents a degree to which an object resists deformation, and may be defined as a value determined by a shape including thickness of the object, a material of the object, and a processing method of the object. In the present disclosure, a degree of heat transfer resistance represents a degree to which an object resists heat transfer, and may be defined as a value determined by a shape including thickness of the object, a material of the object, and a processing method of the object. In the present disclosure, the degree of heat transfer resistance may be defined as at least one or a sum of at least two or more among a degree of conduction resistance, a degree of radiation resistance, and a degree of convection resistance. The terms "upper side", "lower side", "right side", "left side", "front side", and "rear side" used in the following description will be understood through a coordinate system shown in FIGS. 1 and 5. An example of "+Z" means "upper side", an example of "-Z" means "lower side", an example of "+Y" means "right side", an example of "-Y" means "left side", an example of "+X" means "front side", and an example of "-X" means "rear side". A front-rear direction used in this specification may be an example of the X-axis direction, a left-right direction may be an example of the Y-axis direction, and an up-down direction may be an example of the Z-axis direction.

The heat insulator 10 of the present disclosure may be applied to a refrigerator 1. The refrigerator 1 may include a main body 2 provided with a cavity 9 capable of storing stored items, and a door 3 provided to open and close the main body 2. A cold source for supplying cold air to the cavity 9 may be provided. As an example, the cold source may be an evaporator 7 that evaporates refrigerant to remove heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

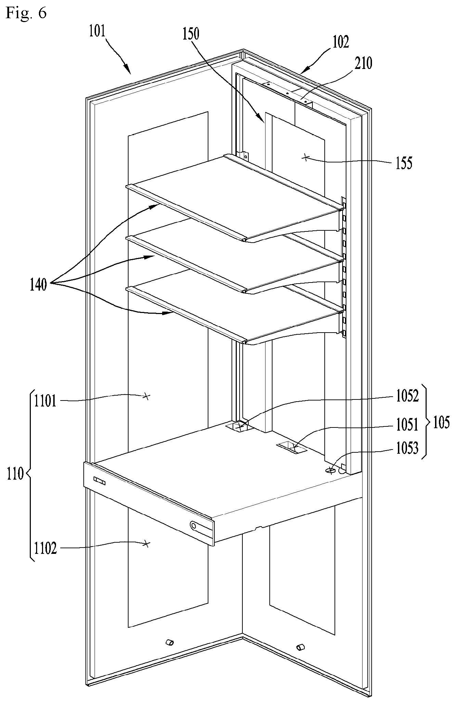

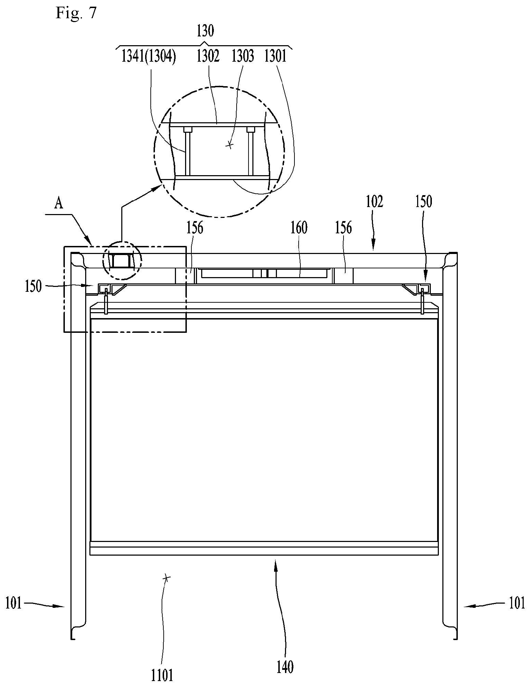

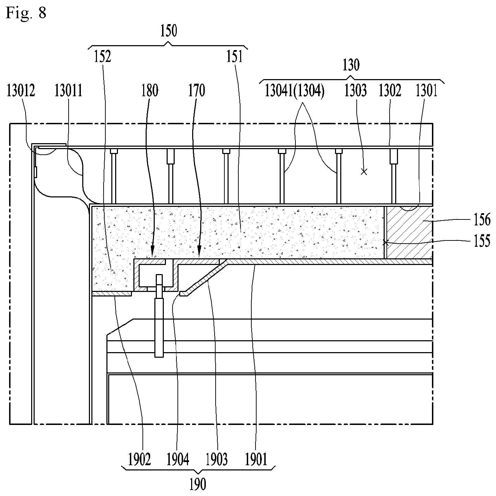

FIG. 5 is a perspective view of a refrigerant according to an embodiment of the present disclosure, FIG. 6 is a perspective view illustrating an interior of the refrigerator in FIG. 5, FIG. 7 is a plan cross-sectional view of a shelf region in FIG. 6, and FIG. 8 is an enlarged view of a main part in FIG. 7. As illustrated in FIGS. 5 to 8, the refrigerator according to the embodiment includes a refrigerator main body 100, a shelf 140, a joint 150, and a shelf support frame 170.

The refrigerator main body 100 forms an exterior appearance of the refrigerator.

The refrigerator main body 100 may be, for example, implemented in a rectangular parallelepiped shape.

For example, The refrigerator main body 100 is configured to have a height that is relatively greater than its width.

A storage chamber 110 is provided inside the refrigerator main body 100.

The refrigerator main body 100 may be provided with a cold air supply means for providing cold air to the storage chamber 110.

The cold air supply means may, for example, be implemented as a refrigeration cycle apparatus utilizing compression, condensation, expansion, and evaporation cycles of a refrigerant. The refrigeration cycle apparatus may, as is well known, be configured to include a compressor, a condenser, an expander, and an evaporator.

On one side (e.g., a lower side) of the refrigerator main body 100, for example, a machine chamber 1103 may be provided.

The machine chamber 1103 may include, for example, the compressor and the condenser.

The evaporator may, for example, be provided in an internal partial region (second storage chamber 1102) of the storage chamber 110.

The storage chamber 110 may, for example, be partitioned into a plurality of chambers.

An interior of the refrigerator main body 100 may include a partition wall 105 partitioning the storage chamber 110 in one direction (e.g., vertically).

The partition wall 105 is implemented in a rectangular parallelepiped shape having a relatively thin thickness.

The partition wall 105 may be configured to include a insulatorinsulating material.

Accordingly, heat transfer between internal spaces (a first storage chamber 1101 and a second storage chamber 1102) of the storage chamber 110 partitioned in one direction (e.g., vertically) may be suppressed.

The storage chamber 110 may be provided with, for example, the first storage chamber 1102 and/or the second storage chamber 1101.

The first storage chamber 1101 and the second storage chamber 1102 may be partitioned by the partition wall 105.

The partition wall 105 may be provided with a cold air supply path 1051.

The cold air supply path 1051 may, for example, be formed to penetrate a partial region (e.g., rear central portion) of the partition wall 105.

A cold air return path 1052 through which air in the first storage chamber 1101 is returned may be formed in the partition wall 105.

The cold air return path 1052 may be formed to penetrate a corner on one side (on a left side in the drawing) of the partition wall 105.

The partition wall 105 may include, for example, a communication part 1053 that allows the first storage chamber 1101 and the second storage chamber 1102 to be in communication with each other.

Accordingly, the first storage chamber 1101 and the second storage chamber 1102 are in communication with each other so that components may be introduced and/or withdrawn.

The communication part 1053 may be formed to penetrate a corner on the other side (a right side in the drawing) of the partition wall 105.

The door 120 includes a first storage chamber door 1301 for opening and closing the first storage chamber 1101.

The door 120 includes a second storage chamber door 1202 for opening and closing the second storage chamber 1102.

Meanwhile, the refrigerator main body 100 includes at least two panels 101, 102, 103, and 104 forming the storage chamber 110.

The at least two panels 101, 102, 103, and 104 may be configured to include, for example, a vacuum heat insulator 130.

Specifically, the panels 101, 102, 103, and 104 are configured to include, for example, first panels 101 disposed on both sides of the storage chamber 110, a second panel 102 disposed in the storage chamber 110, a third panel 103 disposed at one side of the storage chamber 110, and/or a fourth panel 104 disposed at the other side of the storage chamber 110.

In the embodiment, the first panel 101, the second panel 102, and/or the third panel 103 may be formed as the vacuum heat insulator 130.

Accordingly, a thickness of a heat-insulating wall forming the storage chamber 110 of the refrigerator main body 100 may be significantly reduced.

According to such a configuration, a storage capacity of the storage chamber 110 may be significantly increased without increasing an exterior size of the refrigerator main body 100.

The fourth panel 104 may be implemented as the vacuum heat insulator 130 or may be implemented as another insulator insulating material (for example, polyurethane foam).

For example, the vacuum heat insulator 130 may be configured to include a first plate 1301 disposed toward the storage chamber 110, a second plate 1302 spaced apart from the first plate 1301 and forming a vacuum space 1303 with the first plate 1301, a sealing part 13012 sealing the first plate 1301 and the second plate 1302, and/or a support 1304 supporting the first plate 1301 and the second plate 1302.

The first plate 1301 and/or the second plate 1302 may each be implemented as, for example, a metal thin plate.

The first plate 1301 may be configured to have, for example, a thinner thickness than the second plate 1302.

The first plate 1301 may be configured to include, for example, a bent part 13011 of which an corner thereof is primarily bent toward the second plate 1302 and secondarily bent to be surface-connected to the second plate 1302. The sealing part 13012 which is sealingly coupled to the second plate 1302 may be formed at one side of the bent part 13011.

A shelf 140 may be provided inside the first storage chamber 1101.

The shelf 140 may, for example, be implemented in a rectangular plate shape.

The shelf 140 may be disposed spaced apart from the second panel 102 of the first storage chamber 1101 at a predetermined distance.

A joint 150 and/or multi-duct 160, which will be described later, may be provided between the second panel 102 and the shelf 140.

The shelf 140 may be disposed spaced apart from the first panel 101 at a predetermined distance in one direction of the first storage chamber 1101.

The shelf 140 may, for example, be formed to be each spaced inwardly apart from the first panels 101 provided on both sides of the storage chamber 110 by approximately 7 mm.

Accordingly, unnecessary connection between the shelf 140 and the first panel 101 may be suppressed.

Air in the first storage chamber 1101 may move through gaps between both side end portions of the shelf 140 and the first panel 101.

According to such a configuration, occurrence of local temperature deviations inside the first storage chamber 1101 may be suppressed.

The shelf 140 may be implemented as a plurality of shelves which are be disposed spaced apart from each other, for example.

A shelf support frame 170 for supporting the shelf 140 is provided in the first storage chamber 1101.

The shelf support frame 170 may, for example, be provided in a first region (e.g., rear region) of the storage chamber 110 (first storage chamber 1101).

The shelf support frame 170 may, for example, be provided between the second panel 102 and the shelf 140.

Meanwhile, in the refrigerator of the embodiment, the first panel 101 and the second panel 102 are disposed to form a predetermined angle (e.g., a right angle) with each other and are integrally coupled together.

Here, the first plate 1301 of the first panel 101 and/or the first plate 1301 of the second panel 102 may include a bent part 13011 that is bent toward the corresponding second plate 1302 to be surface-connected thereto. One side of the bent part 13011 may be disposed in the storage chamber 110 and/or the other side may be disposed outside the storage chamber 110. Accordingly, the bent part 13011 may form a heat bridge between the inside and the outside of the storage chamber 110.

In the embodiment, the joint 150 made of the insulator insulating material is provided at each of corners forming a boundary between the first panel 101 and the second panel 102.

Accordingly, cold air leakage through the corners (bent parts 13011) of the first panel 101 and the second panel 102 forming the heat bridge between the inside and the outside of the storage chamber 110 may be suppressed.

The joint 150 is configured to include, for example, a first insulating part 151 provided on the second panel 102 and/or a second insulating part 152 bent from the first insulating part 151 so as to be connected to the first panel 101.

Here, the first insulating part 151 and/or the second insulating part 152 may, for example, each be implemented in the rectangular shape.

The joint 150 is configured to include, for example, a connection insulating part 154 connecting the first insulating part 151.

The joint 150 may be, for example, configured to have a predetermined thickness.

In the embodiment, the predetermined thickness of the joint 150 may be implemented as approximately 20 mm, but this is merely an example and is not limited thereto.

The connection insulating part 154 may be configured to connect a portion of the first insulating part 151.

The connection insulating part 154 may be configured to, for example, horizontally connect the first insulating part 151.

The connection insulating part 154 may be provided with a third insulating part 153 capable of blocking corners forming a boundary between the second panel 102 and the third panel 103.

In the embodiment, the corners forming the boundary between the second panel 102 and the third panel 103 may form the heat bridge, and the third insulating part 153 may suppress cold air leakage by blocking the corners forming the boundary between the second panel 102 and the third panel 103.

Here, a length from the second panel 102 to an end portion of the third insulating part 153 may be configured to be equal to, for example, a length from the second panel 102 to an end portion of the second insulating part 152.

In the embodiment, the connection insulating part 154 is formed to have a predetermined width, so that a rectangular multi-duct receiving space 155 may be formed between the first insulating parts 151 spaced apart on both sides of the second panel 102 and the connection insulating part 154.

A multi-duct 160 may be received in the multi-duct receiving space 155.

In the embodiment, the multi-duct 160 may be implemented in the rectangular parallelepiped shape having an approximately thin thickness. A cold air path may be formed inside the multi-duct 160. A cold air discharge hole may be formed to penetrate a surface of the multi-duct 160 to be in communication with the cold air path. At least two cold air discharge holes may be formed to be spaced apart from each other.

In the embodiment, the cold air discharge holes may, for example, be formed in two rows in one direction.

A portion (e.g., bottom) of the multi-duct 160 may be coupled to be connected to a surface of the partition wall 105, and/or a portion (e.g., top) of the multi-duct 160 may be configured to be connected to a portion (e.g., bottom) of the connection insulating part 154.

The multi-duct 160 may be disposed in the first storage chamber 1101.

A unidirectional length (e.g., left-right width) of the multi-duct 160 may be configured to be spaced apart from the first heat insulation part 151 by a predetermined distance.

In the embodiment, a distance between the first insulating parts 151 may be formed to be larger than the unidirectional length (e.g., left-right width) of the multi-duct 160.

Spacers 156 may be provided between the first insulating part 151 and the multi-ducts 160, respectively. The spacers 156 may be provided on both sides of the multi-duct 160, respectively. The spacers 156 may be disposed spaced apart from each other in one direction (e.g., vertically).

In the embodiment, a width of the first insulating part 151 may be formed to be larger than a width of the second insulating part 152.

Accordingly, direct connection between the surface of the second panel 102 and air in the storage chamber 110 may be suppressed.

According to such a configuration, cold air leakage through the second panel 102 may be suppressed.

The joint 150 is provided with a joint support frame 180 that closely supports the joint 150 toward the second panel 102 and/or the first panel 101.

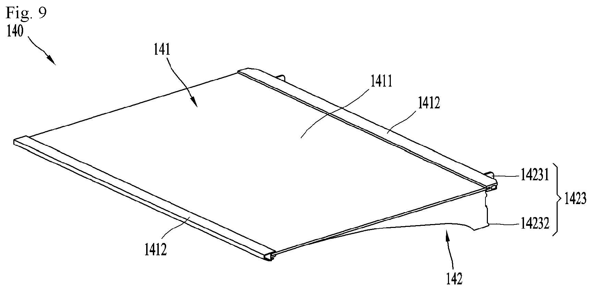

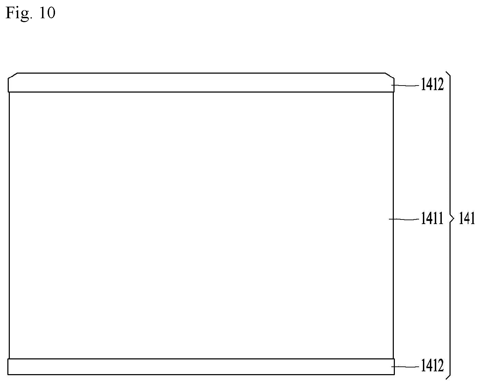

FIG. 9 is a perspective view of a shelf in FIG. 6, FIG. 10 is a plan view of the shelf in FIG. 9,

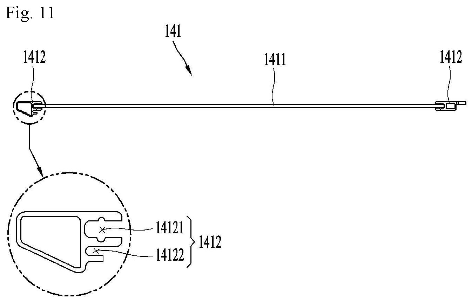

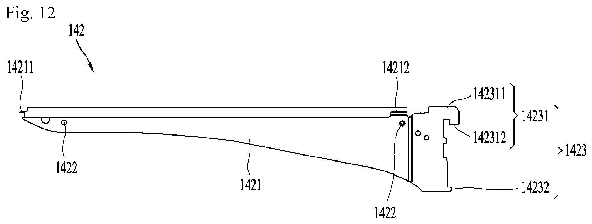

FIG. 11 is a cross-sectional view of a panel part of the shelf in FIG. 9, and FIG. 12 is a side view of a frame of the shelf in FIG. 9. As illustrated in FIGS. 9 to 12, the shelf 140 may be configured to include, for example, a panel part 141 having the rectangular plate shape and a support part 142 supporting the panel part 141 on one side (e.g., lower side) of the panel part 141.

The panel part 141 may be formed of, for example, a transparent rigid member.

The panel part 141 may be formed of, for example, compression tempered glass.

The panel part 141 may be configured to include, for example, a body 1411 having a rectangular plate shape and/or a detachment prevention part 1412 protruding from a surface of the body 1411.

The detachment prevention part 1412 may, for example, be provided on one side (e.g., a front end portion) and/or on the other side (e.g., a rear end portion) of the body 1411.

Accordingly, food (or a container) placed on a surface of the shelf 140 may be prevented from being detached from the shelf 140 (body 1411).

The detachment prevention part 1412 may be made of, for example, a synthetic resin or a rubber.

An insertion part 14121 may be provided on one side of the detachment prevention part 1412 so that one side (one end portion or rear end portion) of the panel part 141 may be inserted.

The insertion part 14121 of the detachment prevention part 1412 may be configured in a groove shape opened on one side.

The support part 142 may be configured to include, for example, a pair of frames 1421 that are disposed spaced apart from each other on one side (e.g., lower side) of the panel part 141 in one direction.

The pair of frames 1421 may be connected to each other by a connection rod 1422.

The connection rod 1422 may, for example, be provided on one side (e.g., a rear end portion) and/or the other side of the pair of frames 1421.

Accordingly, the pair of frames 1421 may be supported in line with each other.

A protruding protrusion 14211 may be provided at one end portion of each of the frames 1421.

The detachment prevention part 1412 disposed on the panel part 141 is provided with protrusion coupling parts 14122 so that the protrusions 14211 may be respectively inserted and coupled thereinto.

The protrusion coupling part 14122 may, for example, be formed to be opened.

The support part 142 and/or the panel part 141 may be coupled by a coupler.

A coupler insertion part 14212 may be provided on one side (e.g., rear end portion) of the support part 142 (frame) so that the coupler (e.g., screw) may be inserted.

The coupler may, for example, be threaded to the panel part 141 (detachment preventing part 1412) after the coupler insertion part 14212 of the support part 142 is inserted.

Accordingly, the panel part 141 and/or the support part 142 may be coupled to a second region (e.g., front region) by the protrusion 14211 and the protrusion coupling part 14122, or a first region (e.g., rear region) may be integrally coupled by the coupler.

Meanwhile, the shelf 140 may be provided with a coupling protrusion 1423.

In the embodiment, the shelf 140 may be implemented in a cantilever shape in which a load is supported by the coupling protrusion 1423 provided in the first region (e.g., the rear region) of the shelf 140.

The pair of frames 1421 may, for example, be configured to increase a height from one side (e.g., one end portion) to the other side (e.g., a rear end portion).

The coupling protrusion 1423 may, for example, be formed spaced apart from a portion (e.g., the rear end portion) of the frame 1421.

The coupling protrusion 1423 may include, for example, a first coupling protrusion 14231 disposed on one side (e.g., upper side) and/or a second coupling protrusion 14232 disposed spaced apart on one side (e.g., lower side) of the first coupling protrusion 14231.

The first coupling protrusion 14231 may include, for example, a protruding protrusion part 142311 and/or a catching part 142312 bent downwardly from an end portion of the protrusion part 142311. The first coupling protrusion 14231 may be implemented in an inverted "L" shape.

The second coupling protrusion 14232 may be formed to protrude.

The shelf 140 may be supported by the shelf support frame 170 provided in the storage chamber 110.

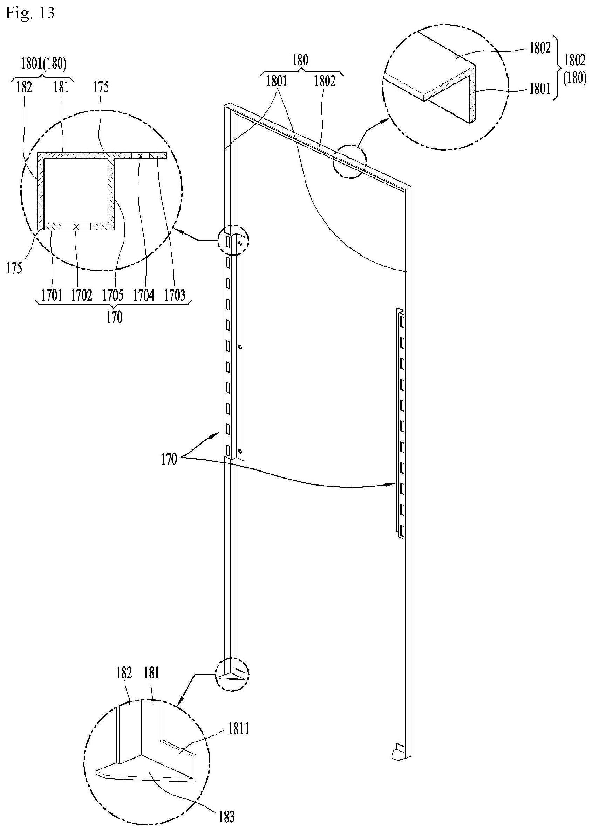

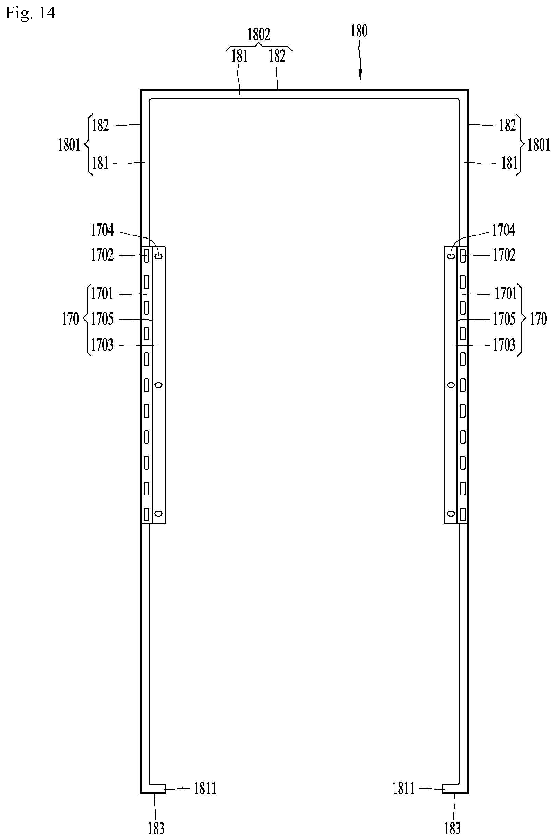

FIG. 13 is a perspective view of the joint support frame and the shelf support frame in FIG. 7, and FIG. 14 is a front view of the joint support frame and the shelf support frame in FIG. 13. As illustrated in FIGS. 13 and 14, in the embodiment, the shelf support frame 170 and the joint support frame 180 may be formed as one body.

Accordingly, the number of installed separate internal component supports for supporting the shelf support frame 170 and the joint support frame 180 may be reduced.

In the embodiment, the joint support frame 180 may be, for example, implemented in an inverted "U" shape by including first sections (e.g., vertical sections) 1801 disposed at both sides of the first storage chamber 1101 and/or a connection section 1802 connecting portions (e.g., upper ends) of the first sections (e.g., vertical sections) 1801.

The shelf support frame 170 may be implemented in a rod shape having a long length in one direction (e.g., vertically).

The shelf support frame 170 may be configured as a pair and may be disposed spaced apart to correspond to portions (e.g., rear end portions) of a pair of frames 1421 of the shelf 140.

The shelf support frame 170 may be configured to be coupled to a partial region of the first section (e.g., vertical section) 1801 of the joint support frame 180.

The joint support frame 180 may be configured to include, for example, a first pressing surface 181 that presses the joint 150 and/or a second pressing surface 182 that is bent on one side of the first pressing surface 181.

The joint support frame 180 may be implemented, for example, in an "L"-shaped cross-sectional shape.

The first section (e.g., vertical section) 1801 and the connection section 1802 of the joint support frame 180 may be configured to include the first pressing surface 181 and the second pressing surface 182, respectively.

Here, the first pressing surface 181 may be disposed in one direction of the storage chamber 110 (first storage chamber 1101). The second pressing surface 182 may be configured to be disposed in one direction of the storage chamber 110 (first storage chamber 1101).

Specifically, the first pressing surface 181 may be connected to the first insulating part 151 and/or the connection insulating part 154 of the joint 150.

Accordingly, the first insulating part 151 and/or the connection insulating part 154 of the joint 150 may be pressed by the first pressing surface 181 to be closely contacted to the second panel 102.

The second pressing surface 182 may be connected to the second insulating part 152 of the joint 150.

Accordingly, the second insulating part 152 may be suppressed from being spaced apart (separated) from the first panel 101.

For example, a bent end portion 1811 bent parallel to the partition wall 105 may be provided at a portion (e.g., lower end) of the first pressing surface 181.

The joint support frame 180 may be configured at a height at which the portion (e.g., lower end) may be connected to a bottom surface of the first storage chamber 1101 and/or the other portion (e.g., upper end) may be disposed to be close to a ceiling surface (third panel 103) of the first storage chamber 1101.

A side surface (second pressing surface 182) of the joint support frame 180 may be configured to be connected to the second insulating part 152 of the joint 150.

The first section (e.g., vertical section) 1801 of the joint support frame 180 may be disposed at a corner of each of the first insulating part 151 and the second insulating part 152 of the joint 150. The connection section 1802 may be disposed at a corner of each of the connection insulating part 154 and the third insulating part 153.

Specifically, the first pressing surface 181 of the first section (e.g., vertical section) 1801 may be connected to the first insulating part 151 and/or the second pressing surface 182 of the first section (e.g., vertical section) 1801 may be connected to the second insulating part 152.

The first pressing surface 181 of the connection section 1802 may be connected to the connection insulating part 154 of the joint 150. The second pressing surface 182 of the connection section 1802 may be connected to the third insulating part 153.

The joint support frame 180 may include a coupling part 183 coupled to the partition wall 105.

The coupling part 183 of the joint support frame 180 may be configured to be disposed at a portion of each of both sides of the first storage chamber 1101.

The coupling part 183 may be implemented, for example, in a triangular plate shape.

One side of the coupling part 183 is disposed parallel to the first panel 101, and the other side is disposed parallel to the second panel 102.

One side of the coupling part 183 may be connected to a portion (e.g., bottom) of the second pressing surface 182. The other side of the coupling part 183 is connected to a portion (e.g., bottom) of the first pressing surface 181 (bent end portion 1811).

Here, the coupling part 183 may be disposed parallel to the partition wall 105.

The coupling part 183 may be coupled to the partition wall 105.

The coupling part 183 may, for example, be joined to the partition wall 105.

Accordingly, a portion of the joint support frame 180 may be integrally coupled to the partition wall 105.

A portion of the joint support frame 180 may be supported by a support bracket 210 provided on the third panel 103.

The support bracket 210 may be provided in a central region of the third panel 103 in one direction of the first storage chamber 1101.

In the embodiment, a portion of the joint support frame 180 may be coupled to and supported by the partition wall 105. The other portion of the joint support frame 180 is supported by the support bracket 210, thereby significantly reducing the number of separate internal component supports for supporting the joint support frame 180.

Meanwhile, the shelf support frame 170 is configured to include, for example, an insertion surface 1701 provided with an insertion hole 1702 into which a coupling protrusion 1423 of the shelf 140 is inserted, a connection back surface 1703 provided on the insertion surface 1701 and connected to the joint 150, and/or a connection surface 1705 connecting the insertion surface 1701 and the connection back surface 1703.

The connection surface 1705 may, for example, be disposed to face the second pressing surface 182 of the first section (e.g., vertical section) 1801 of the joint support frame 180.

The connection surface 1705 may, for example, be disposed in the first storage chamber 1101.

The connection back surface 1703 may, for example, be provided to be bent in a direction away from the first panel 101 from a portion (e.g., a rear end portion) of the connection surface 1705 in one direction of the first storage chamber 1101.

That is, the connection back surface 1703 extends from the connection surface 1705 toward a center (e.g., center in a left-right direction) of the second panel 102 in one direction of the first storage chamber 1101.

The connection back surface 1703 may be provided with a through-hole 1704 formed by penetrating a plate surface.

Although not specifically illustrated in the drawing, a bolt of the internal component support may be, for example, received in and coupled to the through-hole 1704 when the second panel 102 is configured to include the internal component support.

The through-hole 1704 may, for example, be implemented as a plurality of spaced through-holes.

The insertion surface 1701 may, for example, be provided to be bent in a direction close to the first panel 101 from one end portion of the connection surface 1705 in one direction of the first storage chamber 1101.

Accordingly, the insertion surface 1701 is disposed on the first pressing surface 181 of the joint support frame 180 to face the first pressing surface 181.

The insertion hole 1702 is formed spaced apart from the insert surface 1701.

One side of the insert surface 1701 may be coupled to the joint support frame 180.

Specifically, an end portion of the insertion surface 1701 may be coupled to an end portion of the second pressing surface 182 of the joint support frame 180.

Accordingly, the joint support frame 180 and the shelf support frame 170 form a rectangular cross-section after coupling.

A load of the shelf 140 coupled to the insertion surface 1701 of the shelf support frame 170 may be distributedly supported by the first pressing surface 181 of the joint support frame 180 and/or the connection back surface 1703.

According to such a configuration, in the shelf 140, the first coupling protrusion 14231 is inserted into the insertion hole 1702 of the shelf support frame 170, and then the catching part 142312 is connected to a bottom surface of a portion (e.g., lower corner) of the insertion hole 1702, and as a result, detachment of the catching part 142312 may be suppressed.

In the shelf 140, the first coupling protrusion 14231 is inserted into the insertion hole 1702, and then the second coupling protrusion 14232 is inserted and coupled into the insertion hole 1702, and as a result, movement of the shelf 140 may be suppressed.

Meanwhile, a first region (e.g., rear region) of the first storage chamber 1101 is provided with a multi-duct cover 190 that covers a surface of the multi-duct 160.

In the embodiment, the multi-duct cover 190 may be configured in the rectangular plate shape to form, for example, a rear wall of the first storage chamber 1101.

Specifically, the multi-duct cover 190 may be configured to be connected to the first panel 101.

A portion (e.g., bottom) of the multi-duct cover 190 may be configured to be connected to the partition wall 105 and/or a portion art (e.g., top) may be configured to be close to the third panel 103.

Both side regions of the multi-duct cover 190 may be formed to protrude relative to a central region in one direction of the first storage chamber 1101.

Specifically, the multi-duct cover 190 may be configured to include, for example, a multi-duct cover body 1901 disposed in the multi-duct 160 and/or protrusion parts 1902 formed to protrude at both sides of the multi-duct cover body 1901.

Each of the protrusion parts 1902 is disposed on the second insulating part 152 of the joint 150, the joint support frame 180, and/or the shelf support frame 170.

The multi-duct cover body 1901 is configured to be disposed on each side of the connection back surface 1703 of the shelf support frame 170.

The multi-duct cover 190 includes a connection part 1903 connecting the multi-duct cover body 1901 and the each protrusion part 1902.

The each connection part 193 is formed to be inclined.

The connection part 1903 is disposed to be inclined on the connection back surface 1703 of the shelf support frame 170.

A through-part 1904 is provided to penetrate each protrusion part 1902 of the multi-duct cover 190 so that the insertion hole 1702 of the shelf support frame 170 may be exposed to the outside.

The through-part 1904 is formed to have a long length.

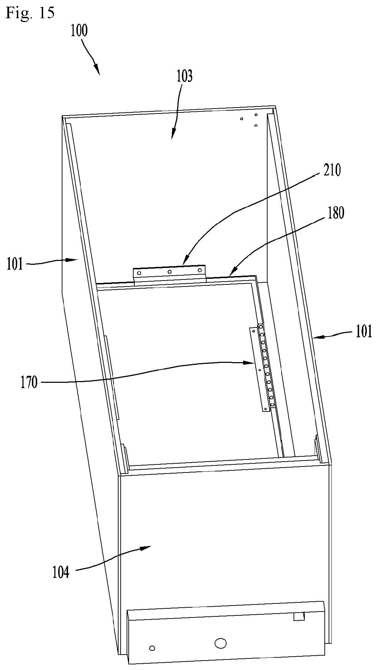

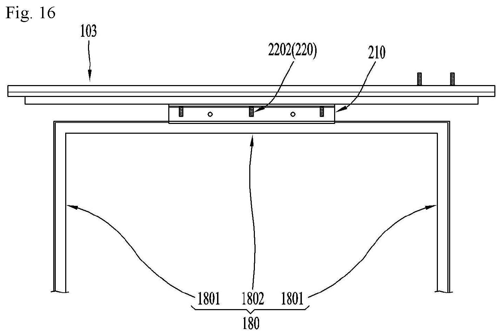

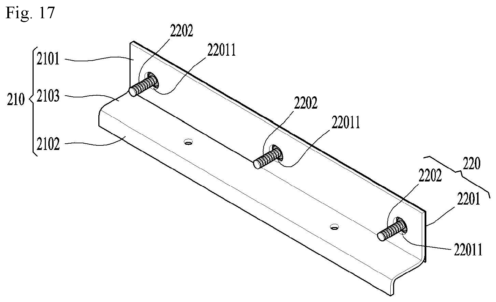

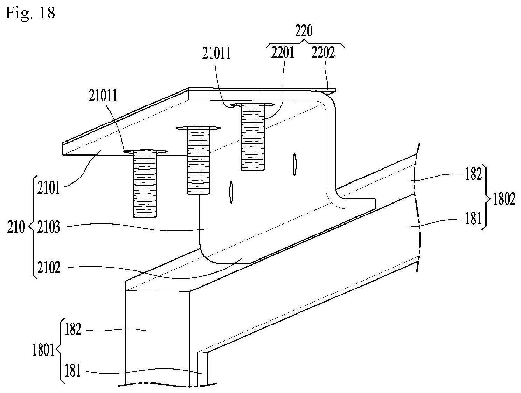

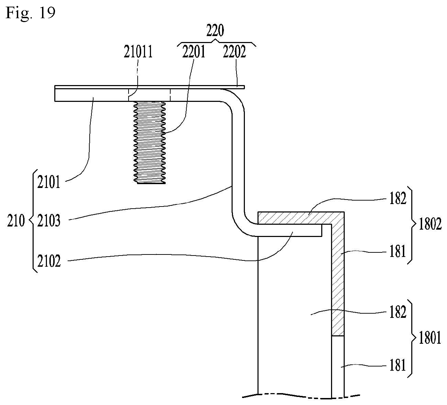

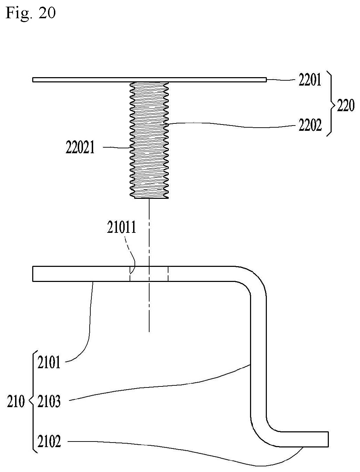

FIG. 15 is a schematic view illustrating an interior for describing a coupling relationship between a joint support frame and a support bracket inside the refrigerator main body in FIG. 5, FIG. 16 is an enlarged front view of a support bracket region in FIG. 15, FIG. 17 is a perspective view of a coupling state of a support bracket and an internal component support in FIG. 16, FIG. 18 is a perspective view of a coupling region of the support bracket and the joint support frame in FIG. 16, FIG. 19 is a side view of the support bracket and the joint support frame in FIG. 18, and FIG. 20 is a side view of the support bracket and the internal component support of FIG. 19 in a separation state.

Referring to FIGS. 6 and 15 to 17 together, the refrigerator main body 100 may be provided with a support bracket 210 to support the joint support frame 180.

For example, as illustrated in FIGS. 16 and 17, the support bracket 210 may be configured to include a coupling part 2101 coupled to the third panel 103, a connection part 2102 connected to the joint support frame 180, and a connection part 2103 connecting the coupling part 2101 and the connection part 2102.

The coupling part 2101 may be disposed parallel to the third panel 103.

The connection part 2102 may be disposed to be connected to a bottom surface of the second pressing surface 182 of the joint support frame 180.

The connection part 2103 may be disposed in the joint support frame 180.

Specifically, the connection part 2103 may be provided in the connection section 1802 of the joint support frame 180.

A surface of the connection part 2103 may be connected to one end portion of the second pressing surface 182 of the connection section 1802 of the joint support frame 180.

Accordingly, separation of a portion (e.g., top) (connection section 1802) of the joint support frame 180 from the second panel 102 may be suppressed.

In the embodiment, as illustrated in FIG. 18, for example, the connection part 2102 may be configured to have a width corresponding to a width of the second pressing surface 182 of the joint support frame 180.

The connection part 2103 may be configured to have a width corresponding to the thickness of the third insulating part 153 of the joint 150.

The coupling part 2101 may be configured to have an expanded width compared to the connection part 2102.

Here, the connection part 2102 has a smallest width, and the connection part 2103 has a larger width than the connection part 2102. The coupling part 2101 may be configured to have a larger width than the connection part 2103.

Meanwhile, the internal component support 220 may be provided between the support bracket 210 and the third panel 103.

As illustrated in FIGS. 19 and 20, the internal component coupler 220 may include a plate 2201 coupled to the storage chamber 110 and a bolt 2202 protruding from the plate 2201, and may be configured as a so-called "bolt plate".

The bolt 2202 may be implemented as a plurality of bolts spaced apart in a lengthwise direction of the plate 2201.

In the embodiment, a case where the bolt 2202 is implemented as three bolts, but this is merely an example and is not limited thereto.

In the embodiment, a case where the internal component support 220 is coupled to the third panel 103 in order to couple the support bracket 210 to the third panel 103 is illustrated, but this is merely an example, and is not limited thereto. The internal component support 220 may be coupled to an inner wall (i.e., the first panel 101, the second panel 102, the third panel 103, and/or the fourth panel 104) of the storage chamber 110 for supporting other components.

The plate 2201 of the internal component support 220 may have a relatively thin thickness.

The plate 2201 of the internal component support 220 may be formed to have a thickness thinner than the thickness of the support bracket 210.

The plate 2201 of the internal component support 220 may be coupled to the first plate 1301 of the third panel 103.

The plate 2201 of the internal component support 220 may, for example, be joined to the first plate 1301 of the third panel 103 by an adhesive.

The plate 2201 of the internal component support 220 may, for example, be coupled to the first plate 1301 of the third panel 103 by welding (laser welding).

The bolt 2202 of the high internal component support 220 is configured to have a male thread part.

A bolt hole 21011 penetrated to be received by the bolt 2202 may be formed in the coupling part 2101 of the support bracket 210.

The bolt hole 21011 of the support bracket 210 may be formed spaced apart in a lengthwise direction of the coupling part 2101 to correspond to the bolt 2202.

According to such a configuration, the second panel 102, the third panel 103, the first panel 101, and the fourth panel 104 may be assembled to form the storage chamber 110. The third panel 103 may be provided at one end of the second panel 102. The first panel 101 may be coupled to each of both sides of the second panel 102. The fourth panel 104 may be coupled to a portion (e.g., bottom) of each of the second panel 102 and the first panel 101. The partition wall 105 may be coupled to allow the storage chamber 110 to be partitioned inside the first panel 101 and the second panel 102.

The joint 150 may be coupled to block corners of the second panel 102, the first panel 101, and the third panel 103.

The joint support frame 180 may be coupled to a surface of the joint 150.

One end of the joint support frame 180 may be coupled to the partition wall 105. The other end of the joint support frame 180 may be supported by the support bracket 210.

The multi-duct 160 may be coupled between the first insulating parts 151 of the joint 150. The multi-duct cover 190 may be coupled to one side of the joint 150 and/or the multi-duct 160.

Meanwhile, the shelf 140 may be coupled to the interior of the first storage chamber 1101.

In the shelf 140, a first coupling protrusion 14231 may be coupled to the insertion hole 1702 of the shelf support frame 170 exposed through the through-hole 1904 of the multi-duct cover 190.

In the each shelf 140, while a catching part 142312 of the first coupling protrusion 14231 is coupled to be connected to a portion (e.g., lower corner) of the insertion hole 1702, the second coupling protrusion 14232 of each shelf 140 may be inserted and coupled into the lower insertion hole 1702.

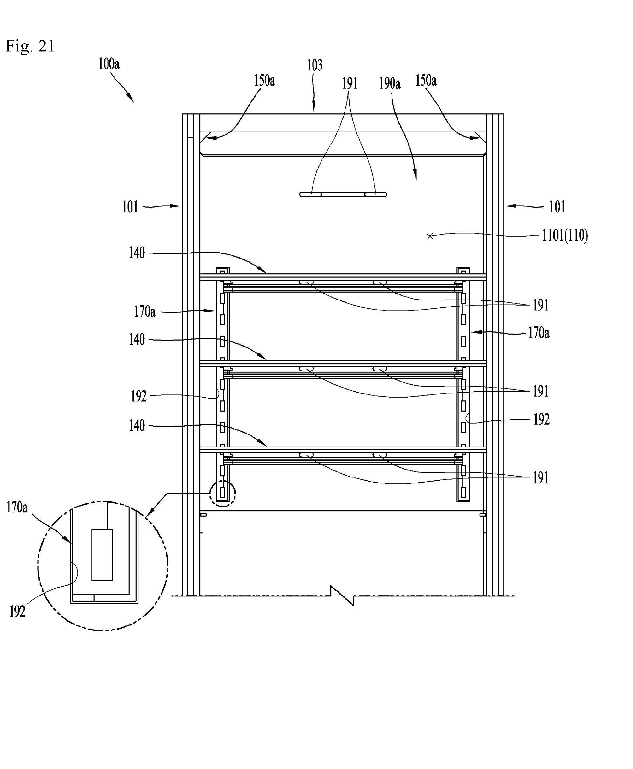

Hereinafter, another embodiment of the present disclosure will be described with reference to FIGS. 21 to 25.

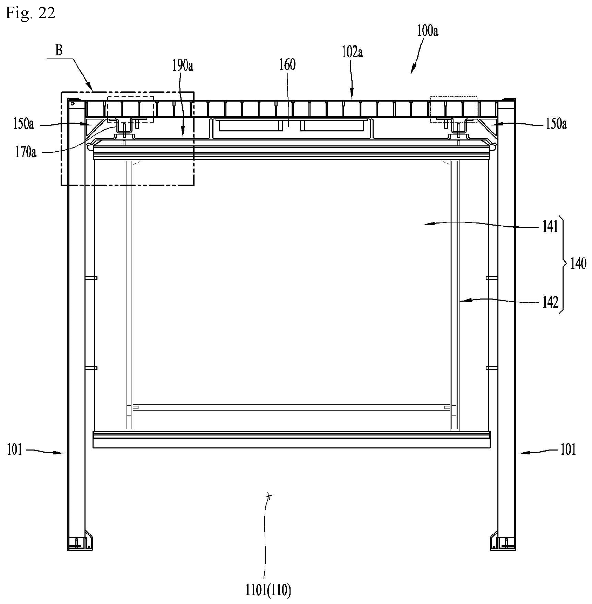

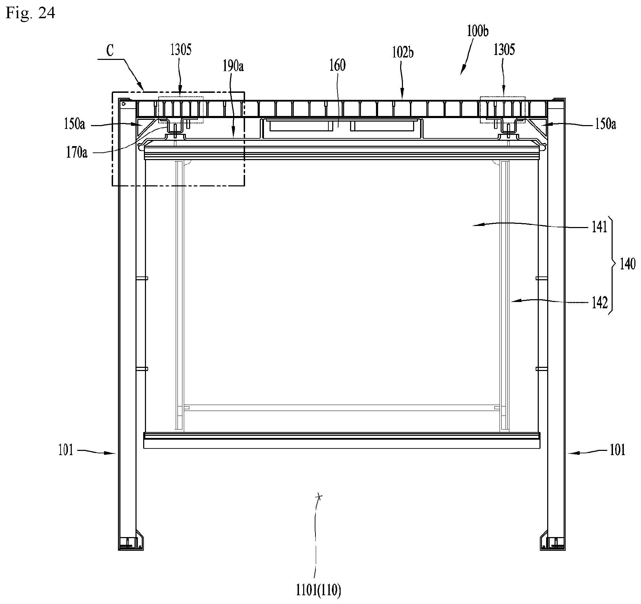

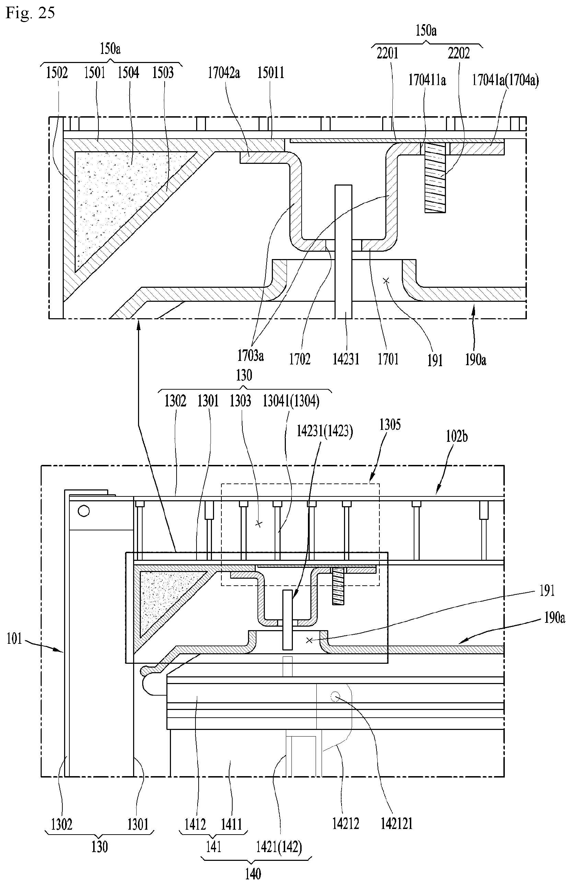

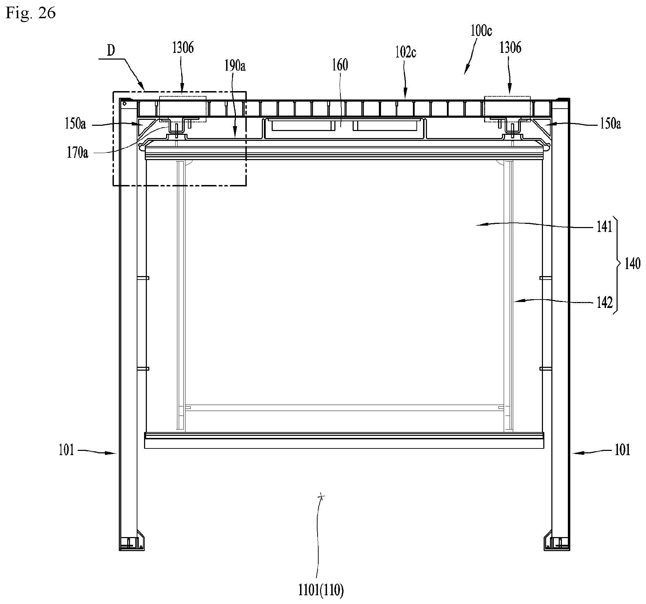

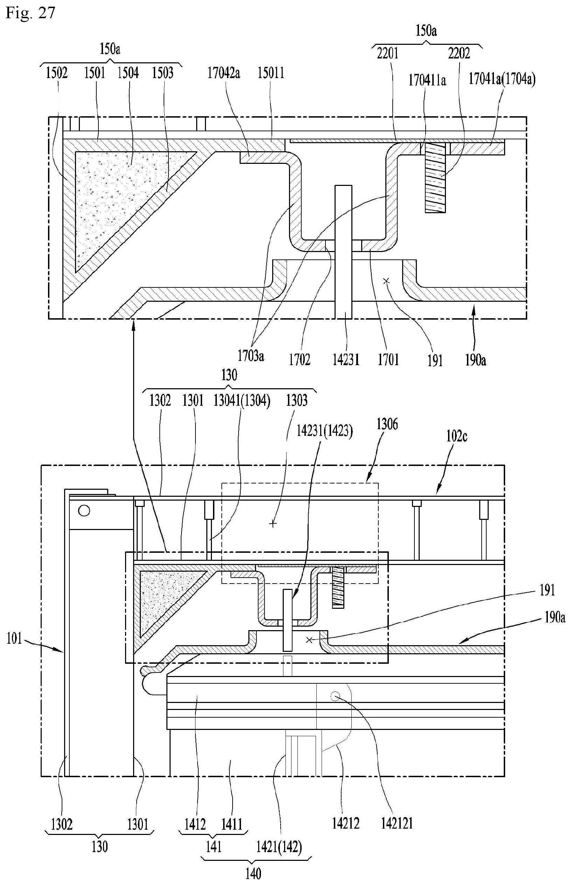

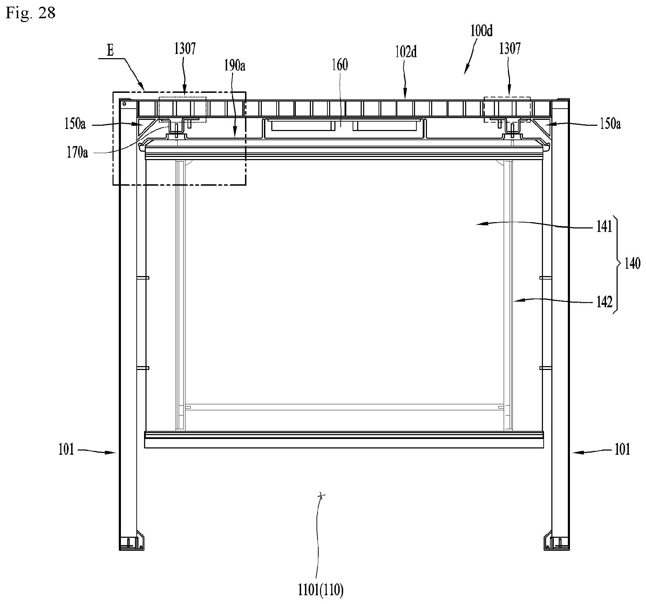

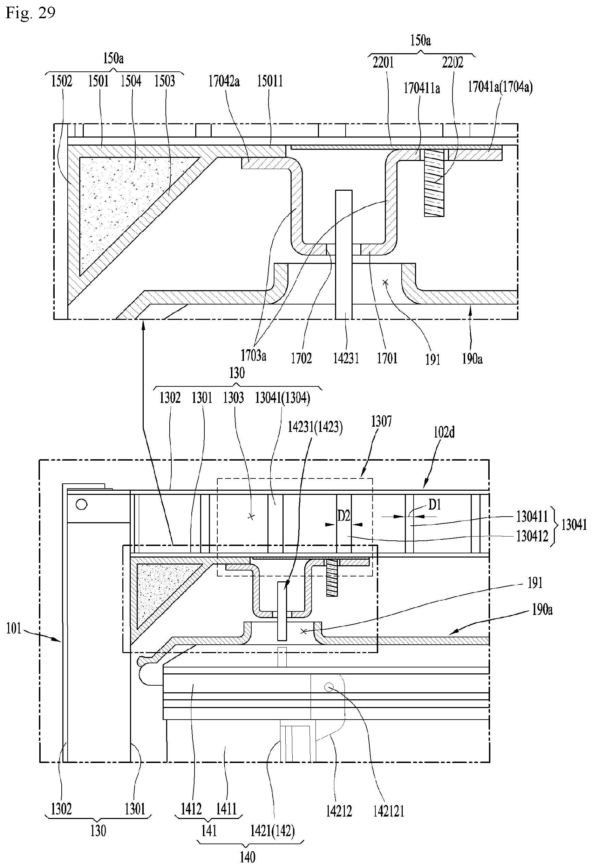

FIG. 21 is a front view illustrating a shelf region of another refrigerator according to another embodiment of the present disclosure, FIG. 22 is a plan cross-sectional view illustrating a coupling state of a shelf in FIG. 21, IG. 23 is an enlarged view of a main part in FIG. 22, FIG. 24 illustrates a modified example of a second panel in FIG. 22, FIG. 25 is an enlarged view of a main part in FIG. 24, FIG. 26 illustrates a modified example of the second panel in FIG. 22, FIG. 27 is an enlarged view of a main part in FIG. 26, FIG. 28 illustrates a modified example of the second panel in FIG. 22, and FIG. 29 is an enlarged view of a main part in FIG. 28. As illustrated in FIGS. 21 to 23, the refrigerator according to the embodiment includes a refrigerator main body 100a, the shelf 140, a joint 150a, and a shelf support frame 170a.

The refrigerator main body 100a may implemented in an approximately rectangular parallelepiped shape.

The refrigerator main body 100a according to the embodiment is configured to include, as described above, the partition wall 105 partitioning the storage chamber 110, the first storage chamber 1101 provided on one side of the partition wall 105, and/or the second storage chamber 1102 provided on the other side of the partition wall 105.

The refrigerator main body 100a may be configured to include, for example, the first panels 101 disposed on both sides of the storage chamber 110, a second panel 102a disposed in the storage chamber 110, and the third panel 103 provided on one side (e.g., upper side) of the storage chamber 110.

The first panel 101, the second panel 102a, and the third panel 103 are assembled to be perpendicular (at right angles) to each other.

A joint 150a may be provided at each of a corner forming a boundary between the second panel 102a and the first panel 101, a corner forming a boundary between the second panel 102a and the third panel 103, and a corner forming a boundary between the first panel 101 and the third panel 103.

Accordingly, leakage of cold air through the corners of the second panel 102a, the first panel 101, and the third panel 103 may be suppressed.

The joint 150a may be configured to include, for example, a insulator insulating material.

Accordingly, cold air leakage through each corner of the storage chamber 110 may be effectively suppressed.

In the embodiment, the joint 150a may be configured to include, for example, a first connection part 1501, a second connection part 1502, a connection part 1503 connecting the first connection part 1501 and the second connection part 1502, and/or a filling part 1504 filled into an interior (hollow space) of at least one of the first connection part 1501, the second connection part 1502, and the connection part 1503.

Here, the first connection part 1501, the second connection part 1502, and/or the connection part 503 may, for example, be configured to form a right triangular shape as a plate-shaped synthetic resin.

A hollow space having a right triangular cross-section is formed inside the first connection part 1501, the second connection part 1502, and the connection part 1503, and the hollow space is filled and foamed with a foaming liquid of the insulator insulating material to form the filling part 1504.

In the embodiment, among the joints 150a, for example, the joint 150a disposed at the corner forming the boundary between the second panel 102a and the first panel 101 may be referred to as a "vertical joint".

At least one of the first panel 101, the second panel 102a, and the third panel 103 is configured as a vacuum heat insulator 130 by including a first plate 1301 disposed toward the storage chamber 110, a second plate 1301 spaced apart from the first plate 1301 and forming a vacuum space 1303 with the first plate 1301, a sealing part 13012 sealing the first plate 1301 and the second plate 1302, and/or a support 1304 supporting the first plate 1301 and the second plate 1302.

In the embodiment, although not specifically illustrated in the drawing, the fourth panel 104 may be provided on one side (e.g., lower side) of each of the first panel 101 and the second panel 102a, as described above.

The fourth panel 104 may be, for example, configured as a vacuum heat insulator 130 having the same structure as the first panel 101, the second panel 102a, and the third panel 103.

As another embodiment, the fourth panel 104 may be implemented as a insulator insulating material (e.g., polyurethane foam).

Meanwhile, a first region (e.g., rear region) of the first storage chamber 1101 is provided with a multi-duct 160 that supplies cold air toward the first storage chamber 1101.

The multi-duct 160 may be provided in a rear central region of the first storage chamber 1101.

A multi-duct cover 190a that covers the multi-duct 160 may be provided on one side of the multi-duct 160.

The multi-duct cover 190a may be, for example, configured to form a rear wall of the first storage chamber 1101.

The multi-duct cover 190a may be implemented in the rectangular plate shape.

The multi-duct cover 190a may be disposed spaced apart from the second panel 102a of the first storage chamber 1101.

Since the multi-duct cover 190a is, for example, installed spaced apart from the second panel 102a, a component installation space may be formed between the second panel 102a and the multi-duct cover 190a. The joint 150a, the multi-duct 160, and/or the shelf support frame 170a may be provided in the component installation space.

Both side end portions of the multi-duct cover 190a may be formed to be connected to the first panels 101, respectively in one direction of the first storage chamber 1101.

According to such a configuration, the second panel 102a may be visually blocked by the multi-duct cover 190a.

For example, a cold air discharge port 191 which penetrate to correspond to the cold air discharge hole of the multi-duct 160 may formed to penetrate the multi-duct cover 190a.

The first storage chamber 1101 may be provided with the shelf 140.

At least two shelves 140 may be, for example, spaced apart in the storage chamber 110 (the first storage chamber 1101).

The cold air discharge port 191 of the multi-duct cover 190a may be formed at a height corresponding to the shelf 140.

Since the shelf 140 has the same structure as the shelf 140 described above in connection with FIGS. 9 to 12, a detailed description thereof will be omitted.

Meanwhile, in the embodiment, the shelf 140 may be supported by the shelf support frame 170a.

The shelf support frame 170a may be made of a metal to support the load of the shelf 140.

In the embodiment, the shelf support frame 170a may be provided on the second panel 102a.

The shelf support frame 170a may be implemented as a pair spaced apart from each other in one direction of the first storage chamber 1101.

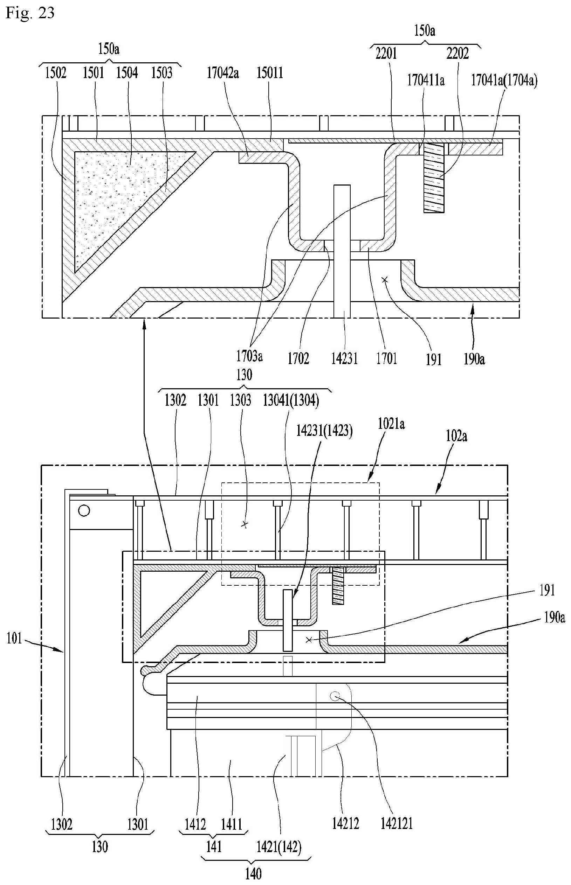

As illustrated in FIG. 23, the shelf support frame 170a is configured to include the insertion surface 1701 provided with the insertion hole 1702 into which the coupling protrusion 1423 of the shelf 140 is inserted, a side surface 1703a bent on one side (e.g., both sides) of the insertion surface 1701, and/or a connection back surface 1704a bent on the side surface 1703a and connected to the second panel 102a.

The each shelf support frame 170a may be disposed on the multi-duct cover 190a.

Each through-part 192 which penetrates to be exposed so that the insertion hole 1702 of the shelf support frame 170a may be exposed to the outside may be formed in the multi-duct cover 190a.

The each through-part 192 may be implemented in a rectangular shape having a long length in one direction (e.g., vertically).

In the embodiment, the connection back surfaces 1704a may be configured to have different widths.

The connection back surface 1704a may include a second connection back surface 17041a extending toward a first direction (right side in the drawing) and/or a first connection back surface 17042a extending toward a second direction of the storage chamber 110 based on the side surface 1703a.

In the embodiment, the second connection back surface 17041a may, for example, be configured to have a width in one direction (e.g., left-right direction) of the storage chamber 110 (first storage chamber 1101) that is larger than a width of the first connection back surface 17042a.

In the embodiment, one region of the joint 150a may be inserted between the first connection back surface 17042a of the shelf support frame 170a and the second panel 102a.

Accordingly, direct connection between the first connection back surface 17042a of the shelf support frame 170a and the second panel 102a (first plate 1301) may be suppressed.

According to such a configuration, heat transfer between the first connection back surface 17042a of the shelf support frame 170a and the second panel 102a may be suppressed.

The first connection part 1501 of the joint 150a is provided with an extension part 15011 extending in a direction away from the first panel 101.

The extension part 15011 may be inserted between the second panel 102a and the shelf support frame 170a (first connection back surface 17042a).

An internal component support 220a supporting the shelf support frame 170a is provided in an interconnection region of the shelf support frame 170a and the second panel 102a.

Specifically, the internal component support 220a may be provided between the second connection surface 17041a of the shelf support frame 170a and the second panel 102a.

The internal component support 220a may, as described above, be configured to include a plate 2201 which is coupled to the second panel 102a and/or a bolt 2202 protruding from the plate 2201.

The plate 2201 may, for example, be made from the metal.

The plate 2201 may, for example, be implemented in the rectangular plate shape.

The bolt 2202 may have, for example, a rod shape, and include a male thread part 22021.

One end portion of the bolt 2202 may be coupled to a surface of the plate 2201.

A bolt hole 170411a is formed to penetrate the second back connection surface 17041a of the shelf support frame 170a so that the bolt 2202 may pass through the second connection back surface 17041a.

The bolt hole 170411a is formed as a plurality of bolt holes spaced apart on the second connection back surface 17041a.

Although not specifically illustrated in the drawing, a nut may be coupled to the bolt 2202 of the internal component support 220a. Accordingly, the shelf support frame 170a may be integrally coupled to the second panel 102a.

Meanwhile, in the embodiment, the support 1304 of the second panel 102a is configured to include at least two bars 13041 disposed spaced apart from each other between the first plate 1301 and the second plate 1302.

One end portion of each of the at least two bars 13041 may be connected to the first plate 1301. The other end portion is connected to the second plate 1302.

Accordingly, the first plate 1301 and the second plate 1302 may be supported by the at least two bars 13041 to be prevented from approaching each other.

In the embodiment, one or more bars may be disposed in a first region (e.g., rear region) of the shelf support frame 170a and/or a first region (e.g., rear region) 1021a of the internal component support 220a (hereinafter referred to as "the first region (e.g., rear region) 1021a of the shelf support frame 170a").

Herein, the first region (e.g., rear region) 1021a of the shelf support frame 170a may mean a region between end portions of both connection back surfaces 1704a where the shelf support frame 170a and the second panel 102a are connected and the load of the shelf 140 is directly applied.

Accordingly, deformation and/or damage of the second panel 102a due to the load of the shelf 140 may be suppressed.

In the embodiment, as illustrated in FIG. 23, a case where two bars are disposed in the first region (e.g., rear region) 1021a of the shelf support frame 170a is illustrated, but this is merely an example and is not limited thereto.

Meanwhile, as illustrated in FIGS. 24 and 25, the second panel 102b is configured to include a strength reinforcement section 1305 in which a density of the bars 13041 in the first region (e.g., rear region) of the shelf support frame 170a is higher than a density of the bars 13041 in a peripheral region.

Accordingly, deformation of the second panel 102b due to the load of the shelf 140 may be suppressed.

The second panel 102b according to the embodiment may be applied to a case where a capacity of the shelf 140 is configured to be relatively large.

Accordingly, deformation of the second panel 102b due to the increased load of the shelf 140 may be effectively suppressed.

In the embodiment, the bar 13041 disposed in the first region (e.g., rear region) (the strength reinforcement section 1305) of the shelf support frame 170a may be formed to have the same shape and size as the bar 13041 disposed in the peripheral region, and a spacing of the bars 13041 may be configured to be reduced.

Meanwhile, as illustrated in FIGS. 26 and 27, the second panel 102c may be configured to include a heat transfer suppression section 1306 in which the density of the bars 13041 in the first region (e.g., rear region) of the shelf support frame 170a is configured to be smaller than the density of the bars 13041 in the peripheral region.

According to such a configuration, formation of a heat bridge between the shelf support frame 170a and the second plate 1302 of the second panel 102c may be suppressed.

Accordingly, cold air leakage due to installation of the shelf support frame 170a may be suppressed. Conversely, heat introduction from an outside of the refrigerator main body 100a to the interior of the first storage chamber 1101 due to connection of the second plate 1302 of the second panel 102c and the shelf support frame 170a may be suppressed.

In the embodiment, the bar 13041 is not installed in the heat transfer suppression section 1306.

In the embodiment, a case where the bar 13041 is not installed in the heat transfer suppression section 1306 is illustrated, but this is merely an example and is not limited thereto.

As another embodiment, the heat transfer suppression section 1306 may be configured such that bars 13041 are installed to have a spacing larger than a spacing of the bars 13041 in the peripheral region.

In the embodiment, a case where a length (e.g., a width in the left-right direction) of the heat transfer suppression section 1306 in one direction (e.g., left-right direction) of the refrigerator main body 100a is formed to be larger than the width of the shelf support frame 170a in one direction (e.g., left-right direction) is illustrated, but this is merely an example and is not limited thereto.

Meanwhile, as illustrated in FIGS. 28 and 29, the second panel 102d is configured to include a first bar 130411 and a second bar 130412 having different thicknesses.

In the embodiment, the first bar 130411 is configured to have a first thickness D1, and the second bar 130412 is configured to have a second thickness D2 that is larger than the first thickness D1.

The second bar 130412 is provided in the first region (e.g., rear region) of the shelf support frame 170a.

Here, the first region (e.g., rear region) of the shelf support frame 170a in which the second bar 130412 is provided may be referred to as a "strength reinforcement section 1307" in that a support strength is reinforced by the second bar 130412.

The first bar 130411 is provided in a remaining region of the second panel 102d except for the first region (e.g., rear region) (strength reinforcement section 1307) of the shelf support frame 170a.

Accordingly, the deformation and/or damage of the first region (e.g., rear region) of the shelf support frame 170a due to the load of the shelf 140 may be suppressed.

Hereinabove, specific embodiments of the present disclosure have been shown and described. However, since the present disclosure may be implemented in various forms without departing from the spirit or essential characteristics thereof, the embodiments described above should not be limited by the specific details for implementing the disclosure.

Even embodiments not individually listed in the detailed description described above should be broadly interpreted within the scope of the technical spirit defined in the appended claims. And all changes and modifications included within the technical scope of the claims and the equivalent scope thereof should be encompassed by the appended claims.

**DETAILED DESCRIPTION OF MAIN ELEMENTS**

| | | | |
|---|---|---|---|
| 1 : | Refrigerator | 2 : | Main body |
| 3 : | Door | 4 : | Compressor |
| 5 : | Condenser | 6 : | Expander |
| 7 : | Evaporator | 8 : | Machine chamber |
| 9 : | Cavity | 10 : | Vacuum adiabatic body |
| 10a : | First vacuum adiabatic body | 10b : | Second vacuum adiabatic body |
| 11 : | First plate | 11a : | First part |
| 11b : | Second part | 11c: | Extended part |
| 11d : | Branch part | 12 : | Second plate |
| 12a : | First part | 12b : | Second part |
| 12c : | Third part | 12d : | Extended part |
| 12e : | Branch part | 13 : | Third plate |
| 14: | Side plate | 14a : | First part |
| 14b : | Second part | 14c : | Extended part |
| 14d : | Branch part | 15 : | Vacuum space |
| 16 : | Vacuum space expansion part | 16a : | X=direction extension part |
| 16b : | Y-direction extension part | 17 : | Connection frame |
| 18 : | Sealing part | 19 : | Support |
| 20 : | Bar | 21 : | Connection plate |
| 22 : | Support plate | 23 : | Radiation resistance sheet |
| 24 : | Shield part | 26 : | Conduction resistance sheet |
| 28 : | Additional heat insulator | 29a : | Central heat insulator |
| 29b : | Peripheral heat insulator | 30 : | Joint |
| 31 : | Port | 32 : | Conduit |
| 33 : | Film | 34 : | Porous material |
| 100, 100a: | Refrigerator main body | 101: | First panel |
| 102,102a,102b,102c,102d: | Second panel | | |
| 1021a: | First region (e.g., rear region) | 103: | Third panel |
| 104: | Fourth panel | 105: | Partition wall |
| 110: | Storage chamber | 1101: | First storage chamber |
| 1102: | Second storage chamber | 120: | Door |
| 1201: | First storage chamber door | 1202: | Second storage chamber door |
| 130: | Vacuum insulator | 1301: | First plate |
| 13011: | Bent part | 13012: | Sealing part |
| 1302: | Second plate | 1303: | Third plate |
| 1304: | Support | 13041: | Bar |
| 130411: | First bar | 130412: | Second bar |
| 1305, 1307: | Strength reinforcement section | | |
| 1306: | Heat transfer suppression section | | |
| 140: | Shelf | 141: | Panel part |
| 1411: | Body | 1412: | Detachment prevention part |
| 14121: | Insertion part | 14122: | Protrusion insertion part |
| 142: | Support part | 1421: | Frame |
| 14211: | Protrusion | 14212: | Coupler insertion part |
| 142121: | Through-hole | 1422: | Connection rod |
| 1423: | Coupling protrusion | 14231: | First coupling protrusion |
| 142311: | Protrusion part | 142312: | Catching part |
| 14232: | Second coupling protrusion | 150, 150a: | Joint |
| 1501: | First connection part | 15011: | Extension part |
| 1502: | Second connection part | 1503: | Connection part |
| 1504: | Filling part | 151: | First insulating part |
| 152: | Second insulating part | 153: | Third insulating part |
| 154: | Connection insulating part | 155: | Multi-duct receiving space |
| 156: | Spacer | 160: | Multi-duct |
| 170, | 170a: Shelf support frame | | |
| 1701: | Insertion surface | 1702: | Insertion hole |
| 1703, 1704a: | Connection back surface | 1703a: | Side surface |
| 1704,170411a: | Through-hole | | |
| 17041a: | Second connection back surface | 17042a: | First connection back surface |
| 180: | Joint support frame | | |
| 1801: | First section (e.g., vertical section) | 1802: | Connection section |
| 181: | First pressing surface | 1811: | Bent end portion |
| 182: | Second pressing surface | 183: | Coupling part |
| 190, 190a: | Multi-duct cover | | |
| 1901: | Multi-duct cover body | 1902: | Protrusion part |
| 1903: | Connection part | 1904, 192: | Through-part |
| 191: | Cold air discharge port | | |
| 210: | Support bracket | | |
| 2101: | Coupling part | 2102: | Connection part |
| 2103: | Connection part | | |
| 220: | Internal component support | | |
| 2201: | Plate | 2202: | Bolt |
| 22021: | Male thread part | | |
| 624 : | Insertion groove | | |

## Claims

1. A refrigerator comprising:
a main body having a storage chamber therein;
a shelf provided inside the storage chamber; and
a shelf support frame supporting the shelf.

2. The refrigerator of claim 15, wherein the joint includes
first insulating parts provided on both sides of the second panel; and
a second insulating part bent from the first insulating part, and being in contact with the first panel,
wherein the shelf support frame is spaced apart from the second panel, and
wherein the first insulating part is provided between the shelf support frame and the second panel.

3. The refrigerator of claim 2, wherein a length of the first insulating part is longer than a length of the second insulating part.

4. The refrigerator of claim 2, further comprising a coupling protrusion extending from rear region of the shelf,
wherein the shelf support frame includes
an insertion surface having an insertion hole into which the coupling protrusion is inserted;
a contacting surface provided on the insertion surface and being in contact with the joint; and
a connection surface connecting the insertion surface and the contacting surface, and
wherein the contacting surface is bent from the connection surface in a direction away from the first panel.

5. The refrigerator of claim 4, wherein a length between the first panel and the insertion surface is longer than a length between the first panel and the shelf.

6. The refrigerator of claim 4, wherein the joint further includes
a connection insulating part connecting the first insulating parts.

7. The refrigerator of claim 6, wherein the joint further includes a third insulating part bent from the connection insulating part so as to contact the third panel.

8. The refrigerator of claim 7, further comprising:
a joint support frame contacting the joint and supporting the joint to be pressed toward the second panel.

9. The refrigerator of claim 8, wherein the joint support frame is formed integrally with the shelf support frame.

10. The refrigerator of claim 9, wherein the joint support frame includes
a first pressing surface pressing the joint; and
a second pressing surface bent on one side of the first pressing surface,
wherein the first pressing surface is in contact with the first heating insulating part and the connection insulating part, and the second pressing surface is in contact with the second insulating part, and
wherein the first pressing surface is disposed to face the insertion surface of the shelf support frame, and the second pressing surface is disposed to face the connection surface of the shelf support frame.

11. The refrigerator of claim 10, further comprising:
a support bracket provided on the third panel and supporting an upper end of the joint support frame.

12. The refrigerator of claim 15, wherein each of the first panel, the second panel, and the third panel is configured as a vacuum heat insulator, includes:
a first plate disposed toward the storage chamber;
a second plate spaced apart from the first plate, and forming a vacuum space with the first plate;
a sealing part sealing the first plate and the second plate; and
a support supporting the first plate and the second plate.

13. The refrigerator of claim 15, wherein the joint includes
a first contact part and a second contact part that are perpendicular to each other;
a connection part connecting the first contact part and the second contact part; and
a filling part filled inside the first contact part, the second contact part, and the connection part,
wherein the joint is disposed so that the first contact part is in contact with the second panel and the second contact part is in contact with the first panel, and
wherein the shelf support frame is provided between the first contact parts.

14. The refrigerator of claim 15, further comprising a coupling protrusion extending from rear region of the shelf, and
wherein the shelf support frame includes
an insertion surface having an insertion hole into which the coupling protrusion is inserted;
both side surfaces bent on both sides of the insertion surface; and
a contacting surface bent on the both side surfaces, and being in contact with the second panel contacting surface.

15. The refrigerator of claim 1, wherein the main body includes:
a first panel provided on a first surface of the storage chamber;
a second panel provided on a second surface of the storage chamber; and
a third panel provided on a third surface of the storage chamber,
further comprising a joint formed as a insulator insulating material, and blocking corners forming a boundary between the first panel and the second panel, and
wherein the shelf support frame is connected to the second panel to be spaced apart from the corner.
